# EUROPÄISCHE PATENTSCHRIFT

(11) **EP 2 964 955 B1**
(45) Veröffentlichungstag und Bekanntmachung des Hinweises auf die Patenterteilung: **13.03.2019**
(21) Anmeldenummer: 14705978.6
(22) Anmeldetag: 18.02.2014
(51) Int. Cl.: F04B 35/04, F04B 39/00, B60T 17/02

(54) **VERDICHTERANORDNUNG ZUM BETREIBEN EINER DRUCKLUFTVERSORGUNGSANLAGE, DRUCKLUFTVERSORGUNGSANLAGE UND DRUCKLUFTVERSORGUNGSSYSTEM SOWIE FAHRZEUG MIT EINER SOLCHEN DRUCKLUFTVERSORGUNGSANLAGE**
COMPRESSOR ARRANGEMENT FOR OPERATING A COMPRESSED AIR SUPPLY FACILITY, COMPRESSED AIR SUPPLY FACILITY AND COMPRESSED AIR SUPPLY SYSTEM, AND VEHICLE WITH SUCH A COMPRESSED AIR SUPPLY FACILITY
ENSEMBLE COMPRESSEUR PERMETTANT DE FAIRE FONCTIONNER UNE INSTALLATION D'ALIMENTATION EN AIR COMPRIMÉ, INSTALLATION D'ALIMENTATION EN AIR COMPRIMÉ ET SYSTÈME D'ALIMENTATION EN AIR COMPRIMÉ, AINSI QUE VÉHICULE ÉQUIPÉ D'UNE TELLE INSTALLATION D'ALIMENTATION EN AIR COMPRIMÉ

(30) Priorität: 04.03.2013 DE 102013003513
(43) Veröffentlichungstag der Anmeldung: 13.01.2016
(73) Patentinhaber: WABCO GmbH, 30453 Hannover (DE)
(72) Erfinder: MEISSNER, Frank, 30453 Hannover (DE); SEEGER, Marco, 30855 Langenhagen (DE)
(74) Vertreter: Lauerwald, Jörg
(86) Internationale Anmeldenummer: PCT/EP2014/000441
(87) Internationale Veröffentlichungsnummer: WO 2014/135252

(56) Entgegenhaltungen:
- DE-A1- 1 428 021
- DE-A1-102007 042 318
- DE-C- 939 225

## Beschreibung

Die Erfindung betrifft eine Verdichteranordnung gemäß dem Oberbegriff des Anspruchs 1. Weiter betrifft die Erfindung eine Druckluftversorgungsanlage sowie ein Druckluftversorgungssystem und ein Fahrzeug mit einer solchen Druckluftversorgungsanlage.

Luftversorgungsanlagen für Luftfederungen oder andere Anwendungen in einem Fahrzeug sind bekannt. Solche Luftversorgungsanlagen erzeugen eine Druckluft, um diese einer beispielhaft genannten Luftfederung zuzuführen. Die Druckluft wird mittels eines Kompressors erzeugt, der durch einen Elektromotor angetrieben wird. Als Elektromotor wird hierfür üblicherweise ein bürstenbehafteter Gleichstrommotor verwendet. Dieser wird im Bordnetz des Fahrzeugs, insbesondere PKW, mit elektrischer Energie aus einer Batterie versorgt. Solche Batterien weisen bspw. eine elektrische Spannung an ihren Anschlussklemmen im Bereich von 9 bis 15 V auf. Die Spannungsamplitude hängt insbesondere von der aktuellen Belastung der Batterie und ihrem Ladezustand ab.

Zum Betreiben des Elektromotors eines Verdichters kann dieser mittels eines Relais elektrisch mit der Batterie verbunden werden. Die Spannung von 9V bis 15V, um bei diesem Beispiel zu bleiben, liegt dann an dem Motor an und der Motor wird dadurch angetrieben. Beim Anlaufen des Motors kann ein sehr hoher Anlaufstrom auftreten, der auch zu einem zumindest temporären Spannungsabfall der Batterie führt. Der Betrieb anderer Verbraucher im Bordnetz, insbesondere das Anlaufen anderer Verbraucher im Bordnetz, kann die Batteriespannung ebenfalls absenken bzw. das Abschalten eines solchen Verbrauchers kann die Batteriespannung wieder anheben. Solche schwankenden Spannungen der Batterie führen zu unterschiedlichen Strömen, die wiederum in dem Elektromotor zu nicht optimalen Betriebsverhältnissen und bspw. zu höherem Bürstenverschleiß führen können. Zudem resultieren unterschiedliche Drehzahlen des Elektromotors und damit des Kompressors, was zu unterschiedlichen Geräuschentwicklungen führen kann. Insbesondere ist eine Geräuschdämmung auf eine vorbestimmte Geräuschfrequenz schlecht abstimmbar.

Es ist beispielsweise aus CN201794753U ein bürstenloser Elektromotor bekannt. Grundsätzlich ist ein elektronisch kommutierter, bürstenloser Motor als ein Gleichstrom-Motor mit einer Leistungselektronik gebildet (sogenannter BDLC-Motor). Die Wicklung ist üblicherweise am Stator, nicht im Rotor (wie beim Gleichstrommotor mit Bürsten), angebracht; beim BLDC Motor ist der mechanische Kommutator bzw. das Bürstensystem durch einen elektronischen Kommutator ersetzt, nämlich zur Steuerung eines Antriebs des Motors, eine sogenannte BLDC- Ansteuerschaltung. Regelmäßig sitzen für eine Permanenterregung Permanentmagnete im Rotor. Eine Ansteuerschaltung mit der Leistungselektronik kann die Gleichstrom-Versorgungsspannung auf die Motorwicklungen schalten. Die meisten BLDC-Motoren haben drei Wicklungen, die sternförmig verbunden sind. Durch eine Impulsbreitenmodulation (PWM - Pulse Width Modulation) kann die Ansteuerschaltung beispielsweise die Durchschnittsspannung zum Motor ändern, um die Drehgeschwindigkeit zu kontrollieren. Es können beispielsweise Hallsensoren, die im Stator eingebettet sind, die Winkelposition des Rotors messen. Wenn die Rotormagnetpole dann die Hallsensoren passieren, geben sie ein hohes oder niedriges Signal ab, wodurch angezeigt wird, ob es sich um den Nord- oder Südpol handelt. BLDC Motoren können auch kommutiert werden, indem anstatt der Verwendung von Hallsensorsignalen die hinteren EMF-Signale überwacht werden. Der Motor wird dann im offenem Kreis gestartet und dann schaltet die Kontrolle auf die Abtastung der hinteren EMF. Es besteht jedoch regelmäßig eine Beschränkung auf Anwendungen mit ziemlich gleichbleibendem Drehmoment und ohne dynamische Anforderungen.

Die DE1428021A1 beschreibt eine Baueinheit aus einem Außenläufermotor und einem stationären Kompressor, welche auf einem Fundament angeordnet sind.

Die DE939225C beschreibt einen Kolbenkompressor für medizinische Zwecke, wobei ein auf einer Grundplatte aufgesetzter Außenläufer-Elektromotor mit gleichmäßiger Umlaufzahl und hohem Schwungmoment mit dem Kolbenkompressor gekuppelt ist.

DE 10 2007 042 318 A1 beschreibt eine eingangs genannte Verdichteranordnung mit einen kompakten trocken laufenden Kolbenverdichter mit mindestens einem Zylinder zur Kompression von Luft eines zugeordneten Kolbens, der per Elektromotor von einem aus Kurbelwelle und Pleuel bestehenden Kurbeltrieb bewegbar ist. Dazu ist in einer ersten Gehäusehälfte eines Gehäuses der Kurbeltrieb untergebracht und innerhalb einer zweiten Gehäusehälfte des Gehäuses der Elektromotor untergebracht. In einer die Gehäusehälften trennenden Trennwand ist ein dem Kurbeltrieb sowie dem Elektromotor gemeinsames Wälzlager eingesetzt. Der Elektromotor ist nach der Art eines bürstenlosen Gleichstrommotors ausgeführt, dessen Stator aus Spulenwicklungen mit Eisenkern besteht und dessen Rotor mit Permanentmagneten bestückt ist. Eine Kommutierungselektronik des Elektromotors ist auf einer in der zweiten Gehäusehälfte untergebrachten Platine angeordnet. Der als Innenläufer ausgebildete Elektromotor kann einen mit der Kurbelwelle einstückig ausgebildeten Rotor aufweisen, der innerhalb des Stators rotierbar ist. Eine solche eingangs genannte Verdichteranordnung ist noch verbesserbar hinsichtlich Ansteuerung und konstruktiver Auslegung.

Eine Pneumatikanlage der eingangs genannten Art ist insbesondere in Form einer Luftfederanlage eines Fahrzeugs gebildet, die mit einer Druckluftversorgungsanlage betrieben wird.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Druckluft-Befüllung - auch Belüftung genannt - den Fahrzeugaufbau anheben und entsprechend mit abnehmender Druckluft-Befüllung -auch Entlüftung genannt- absenken können. Dabei sind Druckluftströme regelmäßig mit Drücken bis 20 bar oder mehr zu führen. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage, insbesondere auch einer Verdichteranordnung, erhöht. Gleichwohl sollte diese möglichst verschleißarm und robust bzw. kompakt zu sein und insbesondere den BauraumAnforderungen an einem Fahrzeug genügen.

Um einen langfristigen Betrieb der Druckluftversorgungsanlage sicherzustellen weist eine Pneumatikhauptleitung der Druckluftversorgungsanlage einen Lufttrockner auf, mit dem die Druckluft zu trocknen ist. Dadurch wird die Ansammlung von Feuchtigkeit im pneumatischen System vermieden. Feuchtigkeit kann bei vergleichsweise niedrigen Temperaturen zu ventilschädigender Kristallbildung führen und darüber hinaus zu unerwünschten Effekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung in der Druckluft enthaltene Feuchtigkeit durch Adsorption aufnehmen kann. Ein Lufttrockner kann gegebenenfalls als regenerativer Lufttrockner ausgelegt werden. Die Granulatschüttung wird dabei bei jedem Entlüftungszyklus mit der getrockneten Druckluft aus der Pneumatikanlage, insbesondere einer Luftfederanlage, meist im Gegenstrom - jedoch je nach Auslegung möglicherweise auch im Gleichstrom relativ zur Belüftungsrichtung- durchströmt wird. Eine Regeneration des Lufttrockners wird im Wesentlichen durch einen Druckwechsel am Lufttrockner ermöglicht, wobei ein im Vergleich zur Adsorption bei der Regeneration vorliegender Druck regelmäßig geringer ist, um eine Feuchtigkeitsabgabe aus dem Granulat zu ermöglichen. Dazu kann die Entlüftungsventilanordnung geöffnet werden, wobei die Regenerationsfähigkeit des Lufttrockners regelmäßig von den Druckverhältnissen und der Druckwechselamplitude in der Druckluftversorgungsanlage abhängig ist. Auch für eine solche sogenannte Druckwechseladsorption hat es sich als wünschenswert erwiesen, eine Druckluftversorgungsanlage flexibel und gleichzeitig verlässlich auszulegen. Insbesondere soll einerseits eine vergleichsweise schnelle Entlüftung ermöglicht werden und dennoch ein für eine Regeneration des Lufttrockners ausreichend hohe Druckwechselamplitude niedriger Luftdruck - d. h. bei Regeneration - zur Verfügung stehen.

Wünschenswert ist es, eine Druckluftversorgungsanlage in möglichst vorteilhafter Form an die Bedürfnisse eines Fahrzeugs anzupassen; dies gilt für eine pneumatische, konstruktive und/oder elektrische und/oder elektronische Auslegung derselben - insbesondere betrifft dies eine Verdichteranordnung zum Betreiben der Druckluftversorgungsanlage.

An dieser Stelle setzt die Erfindung an, deren Aufgabe es ist, eine Vorrichtung und ein Verfahren anzugeben, mittels der Druckluft in einer verbesserten Weise zur Verfügung gestellt werden kann; insbesondere sollten eine konstruktive und/oder elektrische und/oder elektronische Auslegung derselben verbesserte sein. Insbesondere soll eine Verdichteranordnung, eine Druckluftversorgungsanlage, vorzugsweise weiter ein Druckluftversorgungssystem und ein Fahrzeug angegeben werden.

Insbesondere ist es eine Aufgabe der Erfindung eine Verdichteranordnung anzugeben, die vergleichsweise kompakt, insbesondere gleichwohl robust und vergleichsweise flexibel zum Betrieb einer Druckluftversorgungsanlage ausgebildet ist. Insbesondere ist es eine weitere Aufgabe, die Vorrichtung in vereinfachter Weise auszuführen und mit vergleichsweise verringertem Wartungs- und/oder Montageaufwand auszubilden; gleichwohl sollte eine Lebensdauer der Vorrichtung nachhaltig verbessert sein. Insbesondere ist es noch eine weitere Aufgabe der Erfindung eine Vorrichtung anzugeben, die in verbesserter Weise, insbesondere in einem vergleichsweise vorteilhaft vorgegebenen Betriebsrahmen, elektrisch pneumatisch konstruktiv betreibbar ist. Besonders vorteilhaft sind Gleichlaufschwankungen und Geräuschbelastungen bei einer Vorrichtung vorteilhaft verringert, insbesondere sollten elektronische und elektrische Voraussetzungen bestehender Peripheriesysteme zur Steuerung und/oder Regelung einer Vorrichtung zur Erzeugung von Druckluft synergetisch nutzbar sein.

Betreffend die Vorrichtung wird die Aufgabe durch die Erfindung mit einer Verdichteranordnung der eingangs genannten Art gelöst, bei der erfindungsgemäß die Merkmale des kennzeichnenden Teils des Anspruchs 1 vorgesehen sind.

Die Verdichteranordung ist zum Betreiben einer Druckluftversorgungsanlage eines Fahrzeugs ausgebildet und weist einen Verdichter auf mit:
- einem Elektromotor, der als ein elektronisch kommutierter, bürstenloser Gleichstrom-Motor mit einer Ansteuerschaltung umfassend eine Leistungselektronik (BL-DC Motor) gebildet ist,
- einem pneumatischen Kompressor. Erfindungsgemäß ist vorgesehen, dass der Elektromotor in Form eines Außenläufer-Motors gebildet ist.

Betreffend das Verfahren wird die Aufgabe durch die Erfindung mit einem Verfahren des Anspruchs 25 gelöst. Erfindungsgemäß ist vorgesehen, dass die Druckluftversorgungsanlage eines Fahrzeugs mit einer Verdichteranordnung betrieben wird, bei der der Elektromotor in Form eines Außenläufer-Motors gebildet ist.

Im Rahmen einer besonders bevorzugten Weiterbildung des Verfahrens kann vorgesehen sein, dass ein Maß für den Energiespeicherumfang einer Rotationsenergie des Rotors vorgehalten wird.

Das Konzept der Erfindung führt auf eine Druckluftversorgungsanlage gemäß dem Anspruch 22 und ein Druckluftversorgungssystem gemäß dem Anspruch 23 sowie ein Fahrzeug gemäß dem Anspruch 24.

Die Druckluftversorgungsanlage mit der Verdichteranordnung ist bevorzugt zum Betreiben einer Pneumatikanlage, insbesondere einer Luftfederanlage eines Fahrzeugs, ausgebildet und weist auf:
- eine Druckluftzuführung, einen Druckluftanschluss zur Pneumatikanlage und einen Entlüftungsanschluss zur Umgebung;
- zwischen der Druckluftzuführung und dem Druckluftanschluss eine Pneumatikhauptleitung, die einen Lufttrockner, insbesondere ein entsperrbares Rückschlagventil einer Ventilanordnung, aufweist;
- zwischen dem Druckluftanschluss und dem Entlüftungsanschluss eine Entlüftungsleitung mit einem Entlüftungsventil, insbesondere in Verbindung mit einem Steuerventil einer Ventilanordnung, wobei
- die Druckluftzuführung mit von der Verdichteranordnung erzeugbarer Druckluft beaufschlagbar ist.

Bevorzugt ist die Pneumatikanlage in Form einer Luftfederanlage gebildet, die eine Galerie und wenigstens eine an die Galerie pneumatisch angeschlossene Zweigleitung mit einem Balg und/oder einem Speicher sowie einem dem Balg und/oder dem Speicher vorgeordneten Wegeventil aufweist.

Das Druckluftversorgungssystem mit einer Pneumatikanlage und mit einer Druckluftversorgungsanlage ist bevorzugt zum Betreiben der Pneumatikanlage mit einer Druckluftströmung ausgebildet, insbesondere einer Luftfederanlage eines Fahrzeugs, vorzugsweise eines PKWs, wobei die Pneumatikhauptleitung eine Druckluftzuführung von einem Verdichter und einen Druckluftanschluss zu der Pneumatikanlage pneumatisch verbindet.

Das Fahrzeug, insbesondere PKW, ist mit einer Pneumatikanlage, insbesondere einer Luftfederanlage, und einer Druckluftversorgungsanlage versehen, zum Betreiben der Pneumatikanlage mit einer Druckluftströmung.

Grundsätzlich lässt sich das Konzept der Erfindung mit der erfindungsgemäß ausgestalteten Verdichteranordnung auch für andere Anwendungen im Fahrzeugbereich, insbesondere im PKW und/oder Nutzfahrzeugbereich, umsetzen; ist insbesondere nicht beschränkt auf eine Pneumatikanlage in Form einer Luftfederanlage. So lässt sich die Verdichteranordnung --mit oder ohne eine Druckluftversorgungsanlage zur Erzeugung einer Druckluftströmung und/oder zur Aufbereitung von Druckluft-- bevorzugt auch für andere automotive Pneumatikanlagen einsetzen. Dazu gehört grundsätzlich jede Art einer Verdichtungsanwendung im Fahrzeugbereich, sei es mit dynamischer oder statischer Betriebsanforderungsprofil, insbesondere z. B. weiter die Verwendung der Verdichteranordnung gemäß dem Konzept der Erfindung für eine Klimakompressor-Anwendung, insbesondere als Teil einer Klimaanlage in Fahrzeugen, für elektrohydraulische Kompressor-Anwendungen, insbesondere als Teil einer Servolenkung oder als Teil einer Pumpe, insbesondere für eine ABS/EBS-Hydraulikpumpe oder eine Vakuumpumpe oder dergleichen.

Die Erfindung geht aus von der Überlegung, dass eine Verdichteranordnung zum Betreiben einer Druckluftversorgungsanlage einen Verdichter in Form eines pneumatischen Kompressors vorsehen sollte, der über einen Antrieb mit einem Elektromotor antreibbar ist.

Die Erfindung geht weiter von der Überlegung aus, dass sich ein elektronisch kommutierter bürstenloser Motor --insofern als bürstenloser Gleichstromstrommotor (BL-DC-Motor) bezeichnet-- mit Vorteil eignet, die Verdichteranordnung kompakt auszubilden und sich gleichwohl, mittels der erfindungsgemäßen Verwendung des Elektromotors in Form eines Außenläufer-Motors nachhaltig sowie flexibel betreibbar gestalten lässt; dies selbst in Anbetracht von vergleichsweise zunächst insgesamt kostengünstiger verfügbaren Konzepten mit bürstenbehafteten Elektromotoren. Die Erfindung hat erkannt, dass sich ein derartiger elektronisch kommutierter bürstenloser Elektromotor in nochmals verbesserter Weise ausführen lässt, indem der Elektromotor in Form eines Außenläufermotors gebildet ist. Dadurch ist die Grundlage geschaffen, dass selbst dynamische Anforderungen im automotiven Bereich durch das Ausnutzen eines erhöhten des Trägheitsmomentes des Außenläufer-Motors mittels dem BLDC-Motor erfüllbar werden.

Mit Vorteil lässt sich zudem mittels der konstruktiven Auslegung des Elektromotors in Form eines Außenläufermotors eine erhebliche Reduzierung des Einbauraums des Elektromotors und damit der Verdichteranordnung sowie auch der Druckluftversorgungsanlage erreichen. Die Erfindung hat in einem ersten Aspekt erkannt, dass ein Außenläufermotor im Rahmen des Konzepts der Erfindung erhebliche Vorteile zur insbesondere konstruktiven Auslegung der Verdichteranordnung mit sich bringt.

Vorteilhafte Weiterbildungen der Erfindung sind den Unteransprüchen zu entnehmen und geben im Einzelnen vorteilhafte Möglichkeiten an, dass oben erläuterte Konzept im Rahmen der Aufgabenstellung sowie hinsichtlich weiterer Vorteile zu realisieren.

Der Kompressor kann als ein Einzylinderkompressor gebildet sein. Vorzugsweise weist der Kompressor jedoch mehr als einen Zylinder auf; ist insbesondere zur Bildung eines zwei- oder mehrstufigen Verdichters als ein Zweizylinder- oder Mehrzylinder-Kompressor gebildet. Insbesondere kann in einer Zweizylinder- oder Mehrzylinder-Anordnung des Kompressors ein Stufenkolben mit zwei oder mehr Stufen angeordnet sein zur Bildung des zwei- oder mehrstufigen Verdichters. Insbesondere ein Stufenkolben in einer Zweizylinder- oder Mehrzylinder-Anordnung des Kompressors erweist sich als bauraumsparend und effizient sowie flexibel auslegbar.

Insbesondere ergeben sich hinsichtlich des ersten Aspekts eine ganze Reihe von Aufwandsvorteilen bei Herstellung und Wartung der Verdichteranordnung, die unter anderem in einem oder mehreren der Vorteile begründet liegt, wie eine Reduzierung der Bauteilteilzahl, eine vereinfachte Montage oder die Möglichkeit einer integrierten Auslegung oder dem Wegfall von separaten Teilen. So zeigt sich beispielsweise, dass mit dem Konzept der Erfindung als Grundlage bei entsprechender Weiterbildung des Konzepts ein Ausgleichsgewicht, eine Gehäuseabdeckung, eine separate Kurbelwelle, ein Pressverbundteil realisierbar sind bzw. in technisch verlässlicher Weise möglich sind und dies sonst nicht bzw. nicht in der vorteilhaften Weise wie mit einer Weiterbildung der Erfindung möglich ist. Insbesondere lässt sich beispielsweise der Elektromotor in einer vorteilhaften Weise in einem kombinierten Kurbel- und/oder Motorgehäuse in Form eines integrierten Antriebsgehäuses unterbringen.

Gleichwohl zeigt sich, dass die magnetischen Eigenschaften eines Außenläufermotors in verbesserter Weise zur Verbesserung der Leistungsfähigkeit des Elektromotors genutzt werden können. Darüber hinaus lassen sich mechanische Belastungen des Elektromotors mit einer verbesserten Stützlagerung unter Wegfall der Bürsten erreichen. Insgesamt führt dies zu einer erhöhten Lebensdauer des Motors.

Eine verbesserte Betriebsweise des Motors ist bereits dadurch erreichbar, dass Gleichlaufschwankungen bei einem Außenläufermotor aufgrund eines erhöhten Rotationsträgheitsmoments grundsätzlich verringert sind; dies bereits in Anbetracht einer verringerten Anfälligkeit gegen Taumelbetrieb mit hohen Stromamplituden. Unabhängig davon lässt sich ein Rotor als Außenläufer bei einem Außenläufermotor in verbesserter Weise warten und auswuchten sowie lagern.

Im Rahmen einer besonders bevorzugten Weiterbildung ist vorgesehen, dass der Elektromotor mit einer elektronischen Ansteuerschaltung steuerverbunden ist, die ausgebildet ist, den bürstenlosen Motor elektronisch zu kommutieren. Vorzugsweise ist der Elektromotor an einen elektronischen Kommutator angeschlossen und in der Leistungselektronik ist wenigstens ein elektronisches Relais und/oder ein Gleichspannungswandler vorgesehen, derart, dass die Leistungselektronik als Eingang eine Gleichspannungs-Quelle und als Ausgang eine Wechselspannungs-Quelle hat.

Eine Regelung, die insbesondere im Rahmen der Ansteuerschaltung umgesetzt sein kann, setzt im Rahmen einer besonders bevorzugten Weiterbildung auf das Energiespeichervermögen des Rotors auf --dem Konzept der Erfindung folgend ein Außenläufer, insbesondere eine Rotorglocke oder dergleichenund/oder nutzt dieses, um einen in verbesserter Weise "glatten" Stromverlauf zu erzeugen. Das Speichervermögen des Außenläufer-Rotors ergibt sich vor allem aufgrund seines größeren Radius im Vergleich zu seinem Innenläuferrotor als auch im Rahmen der Möglichkeit eine Massenanreicherung am äußeren Radius des Außenläufer-Rotors vorzusehen. Dadurch können vorteilhaft Rückwirkungen auf das Bordnetz vermieden werden, wenn der Elektromotor stark belastet ist. Insbesondere kann mittels der Regelung unter Nutzung der im Vergleich zu einem Innenläufer-Rotor erhöhten Schwungkraft des Außenläufer-Rotors in verbesserter Weise Lastspitzen am Bordnetz des Fahrzeugs gedämpft und/oder verringert und/oder zeitlich verzögert werden; insbesondere können dadurch Überlagerungen von Spitzenamplituden bei mehreren gleichzeitig genutzten Verbrauchern vermieden werden. Im Ergebnis kann dadurch eine Entlastung des Bordnetzes des Fahrzeugs erreicht werden.

Besonders vorteilhaft ist vorgesehen, dass die elektronische Ansteuerschaltung in einer besonders bevorzugten ersten Weiterbildung weiter aufweist: ein erstes Regelmodul, das ausgebildet ist, ein Maß für einen Energiespeicherumfang einer Rotationsenergie des Rotors vorzuhalten, insbesondere eine Drehwinkelgeschwindigkeit des Rotors zu überwachen und/oder zu steuern oder zu regeln. So ist es in vorteilhafter Weise möglich beispielsweise das Einspeichern von Rotationsenergie im Außenläufer-Rotor während eines Anlaufs in einem ersten Umfangsteil einer Winkelbewegung (z. B. ¾ eines Umfangs während einer Anlauf-Winkelbewegung (vor allem Beschleunigungsphase)) zu unterstützen und/oder das Abgeben von Rotationsenergie vom Außenläufer-Rotor während eines Ablaufs in einem zweiten Umfangsteil einer Winkelbewegung (z.B. ¼ eines Umfangs während einer Ablauf-Winkelbewegung (vor allem Verdichtungsphase)) zu unterstützen. Im Rahmen dieser besonders bevorzugten Weiterbildung wurde insbesondere erkannt, dass eine Winkelgeschwindigkeitsüberwachung vorteilhaft ist, um einen Taumelbetrieb des Elektromotors zunächst festzustellen und insofern werden die Voraussetzungen geschaffen, einen Taumelbetrieb zu vermeiden oder möglichst schnell abzustellen.

Besonders bevorzugt lässt sich im Rahmen der vorgenannten ersten Weiterbildung ein geeignetes Drehzahlband, deutlich oberhalb der Taumelgrenze, mittels des ersten Regelmoduls realisieren. Gleichwohl liegt eine bevorzugte Voraussetzung für die erste Weiterbildung in einem möglichst verbessert definierten Arbeitspunkt eines BLDC Motors. Dieser lässt sich insbesondere mittels einer Drehzahlregelung erreichen. Bevorzugt ist vorgesehen, dass die elektronische Ansteuerschaltung weiter aufweist:
ein zweites Regelmodul, das ausgebildet ist, eine Drehzahl des Rotors zu überwachen, insbesondere eine Drehzahl des Rotors zu steuern oder zu regeln. Insbesondere ist der Elektromotor an einen Drehzahlsteller angeschlossen, der ausgebildet ist, die Betriebsspannung am Motor regelbar einzustellen, vorzugsweise konstant zu halten oder zu erhöhen.

Eine besonders bevorzugte zweite Weiterbildung hat erkannt, dass jedenfalls eine Drehzahlüberwachung einer Arbeitspunktsicherung zuträglich ist. Vorteilhaft ergibt sich daraus die Möglichkeit einer Fehlerdiagnose (z. B. eine Feststellung eines Motordefektes über den Abgleich oder eine Plausibilitätskontrolle unterschiedlicher Parameter wie z. B. aus einer Motorstrom- und Drehzahlmessung).

Über eine regeltechnisch definierte Bandbreite einer Drehwinkelgeschwindigkeit und/oder Drehzahl des Außenläufer-Rotors lässt sich vorteilhaft eine optimierte Abstimmung einer Akustik der Verdichteranordnung auf das Fahrzeug umsetzen. So kann ein beispielsweise ein "Flüsterbetrieb" der Verdichteranordnung im Rahmen der elektronischen Ansteuerschaltung implementiert werden; z. B. ein "Flüsterbetrieb" der Verdichteranordnung mit verringerter Drehzahl oberhalb des Taumelbetriebs des Elektromotors. Beispielsweise hat es sich als vorteilhaft erwiesen, die Winkelgeschwindigkeit für einen "Flüsterbetrieb" konstant zu halten. Dann kann zusätzlich oder alternativ eine höhere Stromwelligkeit jedoch geringere Gleichlaufschwankungen zugelassen sein. Diese können auch als Ergänzung für nicht kompensierbare Schwingungsübertragung auf das Fahrzeug nutzbar gemacht werden. Eine "Antischall"-Regelung der Verdichteranordnung lässt sich insbesondere im Rahmen dieser Weiterbildung über den Elektromotor im Rahmen der elektronischen Ansteuerschaltung einleiten, zusätzlich oder alternativ aber auch in Abstimmung mit oder über eine zentrale Fahrzeugsteuerung. Diese und andere Weiterbildungen erweisen sich insbesondere als vorteilhaft bei z. B. einem Elektro- oder Hybridfahrzeug, etwa im Stadtverkehr oder im Stand. Diese und andere Weiterbildungen lassen sich auch durch eine vorteilhafte Primär - und Sekundärlagerung des Elektromotors und/oder Verdichters einerseits als auch der Verdichteranordnung am Fahrzeug andererseits unterstützen.

Insbesondere hat es sich im Rahmen einer Drehzahlüberwachung weiter als vorteilhaft erwiesen eine Abhängigkeit der Drehzahl der Verdichters, insbesondere zunächst des Elektromotors, von der Spannungslage im Bordnetz weitgehend zu beseitigen, jedenfalls aber zu mindern. Es kann vorteilhaft eine Anpassung der Motordrehzahl an einen optimalen Funktionsbereich des Gesamtaggregates vorgesehen sein, z.B. im Hinblick auf die internen Ventile, die Kolbengeschwindigkeiten, die Lagerung, der Berücksichtigung motorspezifischer Kennlinien und Parameter (Drehzahl; Drehmomentverlauf etc.). Insbesondere hat es sich als vorteilhaft erwiesen eine Minimierung des Verschleißes des Verdichters dadurch zu erreichen, dass bei beispielsweise zu hohen Kolbengeschwindigkeiten mittels der Drehzahlregelung eine Begrenzung der Drehzahl umgesetzt wird.

Dazu kann eine Elektromotor-Kontrolle und/oder Überwachung in Echtzeit für einen BLDC-Motor vorgesehen sein.

Beispielsweise hat es sich als vorteilhaft erwiesen über eine nicht bestromte Spule die Motordrehzahl auszulesen und diese als Monitorwert zu nutzen und/oder diese als IST-Wert für eine Drehzahlregelung zu verwenden. Vorteilhaft kann ein mechanischer Fehler, wie z, B. das Blockieren des Elektromotors detektiert werden.

Beispielsweise hat es sich weiter als vorteilhaft erwiesen, eine Auswertung der Strompulsation vorzusehen (z. B. eine Peak-Peak-Auswertung für eine Drehzahlanalyse und/oder eine Mittelwertbildung zur Bestimmung der Leistungsaufnahme).

Insbesondere hat es sich als vorteilhaft erwiesen, ein Regelmodul vorzusehen, das die aktuelle Kurbelwellensteilung ermitteln kann. Vorteilhaft kann damit das An- und Auslaufverhalten beeinflusst werden, insbesondere etwa mittels der Bestimmung der Kurbelwellenstellung anhand eines Strompeaks am oberen Totpunkt derselben. Das Regelmodul kann beispielsweise ein hohes, aber definiertes Moment (Strom) aufrecht erhalten bis ein oberer Totpunkt des Elektromotors erreicht ist oder überwunden ist bzw. dieser wieder normal läuft; dazu kann vorteilhaft ein Shunt genutzt werden.

Hinsichtlich des zweiten Aspekts zeigt sich, dass sich in synergetischer Weise und unter synergetischer Nutzung vorhandener Peripheriesysteme eine Ansteuerung des Elektromotors in Form eines Außenläufermotors in einem Druckregelbetrieb möglich ist. Eine dritte Weiterbildung hat erkannt, dass eine Ansteuerung zur elektronischen Kommutierung des bürstenlosen Motors in synergetischer Weise genutzt werden kann, um einen Druckregelbetrieb zur Verfügung zu stellen. Die besonders bevorzugte Weiterbildung hat erkannt, dass ein Außenläufermotor, der ausgebildet ist, in einem Druckregelbetrieb betrieben zu werden erhebliche Vorteile zur insbesondere elektrischen und/oder elektronischen Auslegung der Verdichteranordnung mit sich bringt. Insbesondere ist unter einem Druckregelbetrieb zu verstehen, dass der Verdichter für angemessene Drucklasten zugelassen wird und/oder eine Druckentwicklung im Kompressor konkret überwacht und geregelt wird. Insbesondere hat es sich als vorteilhaft erwiesen, beispielsweise bei zeitunkritischen Vorgängen eine Drucklast zu senken mittels der elektronischen Ansteuerschaltung. Dazu kann beispielsweise ein langsameres Speicher- oder Balgfüllen mittels einer verringerten Lastdrehzahl bei Energiemangel und Luftbedarf vorgesehen sein. Andererseits lässt sich bei Bedarf, insbesondere bei zeitkritischen Vorgängen, eine Drucklast geregelt erhöhen; z. B. können dazu Möglichkeiten zum schnellen Heben aus Kompressor durch Überdrehzahl genutzt werden, wie z. B. ein Boost-Betrieb.

In einer bevorzugten vierten Weiterbildung kann ein viertes Regelmodul vorgesehen sein, das zur Umsetzung einer Sanftanlauf- und/oder Auslauf-Regelung ausgebildet ist, um einen Anlaufstrom und/oder einen Auslaufstrom des Elektromotors zu begrenzen (CSS), insbesondere die Betriebsspannung am Motor regelbar einzustellen, vorzugsweise konstant zu halten oder zu erniedrigen. Eine komplette Ankerwicklung kann z. B. drei Wicklungen von drei Spulen haben, die verbunden sind. Bevorzugt ist wenigstens eine Wicklung der kompletten Ankerwicklung an eine elektrische und/oder elektronische Ansteuerschaltung angeschlossen, so dass über eine Spannungsregelung ein Druckregelbetrieb und/oder ein Sanftanlauf und/oder eine Anpassung an eine Bordnetzspannung für den Elektromotor erfolgen können. Beispielsweise lässt sich eine Strombegrenzung bei Anlauf und Betrieb und/oder eine Minimierung der Stromspitzen bei einer "Sanftanlauf"-Funkiton umsetzen, wie etwa eine langsamere Drehzahlerhöhung des Elektromotors. Dadurch lässt sich insbesondere ein Lastwechselschlag einer Welle des Elektromotors und/oder Verdichters um die rotierende Achse durch spontan ansteigendes Rückdrehmoment unterbinden.

Insbesondere kann auch vorgesehen sein, dass ein Auslauf bei geringster Stromaufnahme (z. B, nahe einem unteren Totpunkt des Elektromotors) zur Entlastung eines Bordnetzes genutzt wird, indem eine Minderung einer der geringsten Stromaufnahme zugeordneten der Stromflanke herbeigeführt wird. Dazu kann ein hartes Abschalten beim Strom-Minimum genutzt werden; das vierte Regelmodul kann eine Referenz bei jeder Umdrehung erhalten.

Vorteilhaft lässt sich zusätzlich oder alternativ eine kontrollierte, insbesondere elektronische Bremsung des Motors im Abschaltmoment vorsehen. Insbesondere kann dies auch genutzt werden, um eine Taumelbewegung um die Motorachse zu mindern. Dies lässt sich insbesondere infolge der höheren Masse des Außenläufer-Rotors effektiv umsetzen.

In einer Realisierung ist die Ankerwicklung über ein elektronisches Relais und/oder einen Gleichspannungswandler an die externe Ansteuerschaltung und/oder ein Bordnetz angeschlossen.

Bevorzugt ist der Elektromotor mit einer elektronischen Ansteuerschaltung last- und/oder steuerverbunden. Dazu kann ein Steuerstrom und/oder Laststrom durch den Regler gehen. Bevorzugt ist die Ansteuerschaltung extern eines Gehäuses der Verdichteranordnung angeordnet, vorzugsweise umfassend wenigstens ein elektronisches Relais und/oder einen Gleichspannungswandler, und die ein erstes und/oder zweites und/oder drittes Regelmodul aufweist.

Im Rahmen einer besonders bevorzugten Weiterbildung ist vorgesehen, dass der Elektromotor mit einer elektronischen Ansteuerschaltung steuerverbunden ist, die ausgebildet ist, den bürstenlosen Motor elektronisch zu kommutieren. Dabei ist die elektronische Ansteuerschaltung weiter ausgebildet, den Elektromotor in einem Druckregelbetrieb zu betreiben.

Es hat sich als besonders vorteilhaft erwiesen, dass die Ansteuerschaltung als interne Ansteuerschaltung in einem Gehäuse des Verdichters der Verdichteranordnung untergebracht ist. Zum Einen zeigt sich, dass sich in dem Gehäuse des Verdichters Einbauraum für eine Leistungselektronik und/oder die Ansteuerschaltung schaffen lässt; d. h. insbesondere ohne den Bauraumbedarf des Verdichters wesentlich zu erhöhen. Zum Anderen zeigt sich, dass bei einem BLDC-Motor der vorliegenden Art durchaus kurze Kabelwege ohne Verdrillung vorteilhaft sind, z. B. um EMV-Emissionen so gering wie möglich zu halten. Gleichwohl kann auch in Fällen, in denen Bauraum extern zur Verfügung steht, auch eine externe Ansteuerschaltung, d. h. extern des Verdichters, insbesondere extern des Elektromotors, d. h. außerhalb eines Gehäuses des Verdichters und/oder Elektromotors, insbesondere außerhalb eines kombinierten Verdichter und Motorgehäuses, vorgesehen sein. Beispielsweise lässt sich eine Ansteuerschaltung vorteilhaft auch als Teil oder in der Nähe der ECU oder einer sonstigen zentralen Fahrzeugsteuerung vorsehen; dadurch können Synergie-Effekte genutzt werden.

In besonders bevorzugter Weiterbildung ist die Ansteuerschaltung an einen elektronischen Kommutator angeschlossen. Bevorzugt weist die Ansteuerschaltung weiter einen Druckregeleingang und/oder einen Anschluss an einen Drehzahlsteller auf. Insbesondere auf dieser Grundlage ist die Ansteuerschaltung ausgebildet, die Betriebsspannung am Motor regelbar einzustellen.

Insbesondere ist die Ansteuerschaltung ausgebildet, die Betriebsspannung am Motor konstant zu halten oder zu erhöhen. Gleichwohl hat es sich als vorteilhaft erwiesen, die insbesondere externe Ansteuerschaltung weiter auszubilden, im Rahmen einer Sanftanlaufregelung. Vorzugsweise weist die Ansteuerschaltung ein Regelmodul auf, das zur Umsetzung der Sanftanlaufregelung ausgebildet ist, einen Anlaufstrom des Elektromotors zu begrenzen. Im Rahmen der regelbar einstellbaren Betriebsspannung kann es sich darüber hinaus als vorteilhaft erweisen, diese konstant zu halten oder zu erniedrigen.

Vorteilhaft ist zur Einstellung einer Betriebsspannung die elektrische Ansteuerschaltung ausgebildet, eine Betriebsspannung, vorzugsweise in Form einer Wechselspannungsquelle, an eine Bordnetzspannung anzupassenvorzugsweise alternativ oder wahlweise alternativ oder kombinierbar oder gleichzeitig-- in einem oder mehreren der Spannungsbereiche, vorzugsweise einer Gleichspannung, ausgewählt aus der Gruppe von Bereichen, umfassend:
- eine Spannung zwischen 8 V und 50 V;
- eine Spannung zwischen 10V und 15V, vorzugsweise bei 12V,
- eine Spannung zwischen 14 V und 37 V,
- eine Spannung zwischen 42V und 49V, vorzugsweise bei 48V,
- eine Spannung zwischen 200- 650V. Diese Weiterbildung trägt der Maßgabe Rechnung, dass ein Fahrzeug beispielsweise mit einem fortschrittlichen 48V-Bordnetz versehen sein kann, zusätzlich aber ein zweites Bordnetz mit bisher gängigen 12V Bordnetzspannung aufweisen kann. Dabei ist zunächst offen, ob die erste und/oder zweite Bordnetzspannung mittels einer Batterie zur Verfügung gestellt wird und/oder die Spannung über einen Wandler erzeugt wird. Insbesondere kann im Rahmen eines Hybridantriebs für ein Fahrzeug auch wenigstens ein erstes und ein zweites Bordnetz nebeneinander betrieben werden, insbesondere können wenigstens bis zu drei Bordnetze vorgesehen sein. Der Kompressor kann dann gemäß der vorgenannten Weiterbildung beispielsweise an allen drei Bordnetzen betrieben werden, jedoch nur an einem der genannten Netze zeitgleich.

Die elektrische und/oder elektronische Ansteuerschaltung kann vorzugsweise ein Regelmodul aufweisen, insbesondere wenigstens ein elektronisches Relais und/oder einen Gleichspannungswandler. Im Rahmen einer besonders bevorzugten Weiterbildung hat es sich als vorteilhaft erwiesen, dass eine elektrische und/oder elektronische Ansteuerschaltung umfasst:
- einen Gleichspannungsausgang zum Bereitstellen einer konstanten Versorgungsgleichspannung mit einer ersten Ausgangsamplitude zum Ansteuern des Elektromotors des Verdichters und einen Gleichspannungswandler zum Erzeugen der Versorgungsgleichspannung. Insbesondere weist der Gleichspannungswandler dazu einen Tiefsetzsteller und/oder einen Hochsetzsteller auf.

Die elektrische und/oder elektronische Ansteuerschaltung der Verdichteranordnung weist bevorzugt weiter auf:
- einen ersten Gleichspannungseingang zum Anschließen an eine erste Gleichspannungsquelle und/oder einen zweiten Gleichspannungseingang zum Anschließen an eine zweite Gleichspannungsquelle, wobei
- eine erste Gleichspannungsquelle, die eine erste variable Eingangsspannung bereitstellt, die etwa der ersten Ausgangsamplitude entspricht und/oder kleiner ist, und
eine zweite Gleichspannungsquelle, die eine zweite Eingangsspannung bereitstellt, die größer als die erste Ausgangsamplitude ist.

Hinsichtlich der konstruktiven Auslegung der Verdichteranordnung bietet die Darstellung des Elektromotors in Form eines Außenläufermotors eine besonders vorteilhafte Grundlage, um Bauraum- und Laufstabilitätsvorteile zu realisieren.

Insbesondere zeigt sich, dass der Kompressor über einen vom Elektromotor und einem Kurbeltrieb gebildeten Antrieb antreibbar ist, wobei der Antrieb in einem Kurbeltrieb und Elektromotor umschließenden integrierten Antriebsgehäuse untergebracht ist. Insbesondere kombiniert das integrierte Antriebsgehäuse ein Motorgehäuse und ein Kurbelgehäuse kombiniert und schließt an ein Kolbengehäuse an.

Vorteilhaft weist der Elektromotor einen Stator, einen Rotor und eine mit dem Rotor gekoppelte Antriebswelle auf, wobei der Stator getrennt durch einen Luftspalt im Rotor gehalten und vom Rotor rotierbar umgeben ist, wobei der Rotor mit einer Rotorglocke gebildet ist. Insbesondere ist vorgesehen, dass
- der Rotor eine Anzahl von Permanentmagneten trägt, und
- der Stator einen Anker, insbesondere ein Blechpaket, mit einer Ankerwicklung trägt, die vorzugsweise an eine elektrische und/oder elektronische Ansteuerschaltung angeschlossen ist.

Bevorzugt weist der Kompressor mindestens ein Pleuel und/oder mindestens einen Kolben auf, das über eine Kurbelwelle antreibbar ist, wobei die Kurbelwelle an die Antriebswelle gekoppelt ist.

Grundsätzlich können die Permanentmagnete vergleichsweise einfach und kostengünstig auf Basis eines Eisenmaterials als Ferrit gebildet sein. Zur vorteilhaften magnetischen Auslegung des Stators eignen sich auch andere Materialien, die darüber hinaus Gewichtsvorteile aufweisen können.
Insbesondere hat es sich als vorteilhaft erwiesen, dass die Permanentmagnete auf Basis eines Eisenmaterials mit einer Kobaltverbindung wie beispielsweise einer Aluminium-Nickel-Kobalt- oder Samarium-Kobalt-Eisen-Verbindung gebildet ist. Insbesondere können die Permanentmagnete auch auf Basis eines Eisenmaterials mit einer Bismutverbindung, insbesondere einer Bismut-Mangan-Eisen-Verbindung (Bismanol) gebildet sein. Im Rahmen einer besonders bevorzugten Weiterbildung hat es sich als vorteilhaft erwiesen, dass die Permanentmagnete auf Basis eines Eisenmaterials mit einer Selten-Erdverbindung wie beispielsweise einer Neodym-Verbindung, vorzugsweise einer Neodym-Eisen-Bor-Verbindung gebildet ist.

Im Rahmen einer besonders bevorzugten Weiterbildung schließt an die Antriebswelle motorabtriebsseitig ein exzentrisch zur Motorachse gebildeter Hubzapfen an, der die Kurbelwelle bildet. Dies lässt sich besonders kompakt realisieren und bietet die Basis für weitere bevorzugte konstruktive Weiterbildungen.

Insbesondere kann der Hubzapfen einstückig oder mittels Presssitz oder dergleichen Reib- und/oder Formschluss-Verbindung an die Antriebswelle angesetzt sein. Vorteilhaft kann zusätzlich oder alternativ die Rotorglocke wenigstens in einem Anschlussteil einstückig oder mittels Presssitz oder dergleichen Reib- und/oder Formschluss-Verbindung angesetzt sein. In einer ersten Variante dieser Weiterbildung kann die Rotorglocke an die Antriebswelle angesetzt sein. In einer alternativen oder kombinierbaren zweiten Variante kann die Rotorglocke an den Hubzapfen angesetzt sein. Insbesondere lässt sich so mittels der Antriebswelle, dem Hubzapfen und wenigstens dem Anschlussteil ein einstückiges oder mittels Presssitz oder dergleichen Reib- und/oder Formschluss-Verbindung gebildetes Kurbeltriebbauteilbilden.

Es zeigt sich, dass sich ein solches Kurbeltriebbauteil besonders vorteilhaft, insbesondere stabil und mit Vorteilen beim Gleichlauf und/oder der Geräuschentwicklung, lagern lässt. Gleichwohl lässt sich der Bauraum für eine Lagerung vergleichsweise flexibel, vorzugsweise bedarfsgerecht, und kompakt gestalten.

In einer ersten besonders bevorzugten Variante dieser Weiterbildung kann das Kurbeltriebbauteil von einer Lageranordnung, umfassend ein Pleuellager und wenigstens ein Achslager, insbesondere ein Pleuellager, vorzugsweise als ein Wälzlager, und ein erstes und ein zweites Achslager, gelagert sein. Vorzugsweise weist die Lageranordnung ein Pleuellager, ein erstes Achslager (A-Lager) und zweites Achslager (B-Lager) auf. Insbesondere ist ein erstes Achslager (A-Lager) und/oder ein zweites Achslager (B-Lager) mittels wenigstens einem Wälzlager oder einem Nadellager, insbesondere mit wenigstens einer Lagerhülse, gebildet.

In einer zweiten besonders bevorzugten Variante dieser Weiterbildung kann das Kurbeltriebbauteil in Kombination mit einem Gegenlagerstück von einer Lageranordnung umfassend ein Pleuellager, ein Achslager und ein Gegenachslager, insbesondere ein Pleuellager und genau ein erstes oder ein zweites Achslager und das Gegenachslager, gelagert sein. Vorzugsweise weist die Lageranordnung also ein Pleuellager, vorzugsweise als ein Wälzlager, und ein erstes Achslager (A-Lager) oder ein zweites Achslager (B-Lager) und ein Gegenachslager auf.

Anders ausgedrückt kann in einer bevorzugten ersten Abwandlung die Lageranordnung ein Pleuellager, genau ein Achslager, nämlich das erste Achslager, und ein Gegenachslager umfassen. In einer bevorzugten zweiten Abwandlung kann die Lageranordnung ein Pleuellager, genau ein Achslager, nämlich das zweite Achslager, und ein Gegenachslager umfassen.

Insbesondere lässt sich mittels der Rotorglocke ein Ausgleichsgewicht realisieren; etwa mittels einer Ausgleichsbohrung oder dergleichen Materialentfernung oder etwa mit einem einseitigen zusätzlichen Materialauftrag.

Insbesondere lässt sich zusätzlich oder alternativ motorabtriebsseitig und exzentrisch zur Motorachse das Kurbeltriebbauteiloder das Gegenlagerstück mit einem Ausgleichsgewicht ausbilden.
Insbesondere kann in einer ersten Variante dieser Weiterbildung das Ausgleichsgewicht zwischen dem Pleuellager und dem ersten Achslager (A-Lager) an dem Kurbeltriebbauteilgebildet sein, insbesondere einstückig als Teil eines Hubzapfens.

Insbesondere kann in einer zweiten Variante dieser Weiterbildung das Ausgleichsgewicht zwischen dem Pleuellager und dem Gegenachslager an dem Gegenlagerstück gebildet sein, insbesondere einstückig als Teil eines Gegenlagerstücks.

Insbesondere kann die Antriebswelle in einem ersten Achslager gelagert sein, das einem Pleuellager unmittelbar benachbart angeordnet ist, insbesondere nur in dem ersten Achslager gelagert sein.

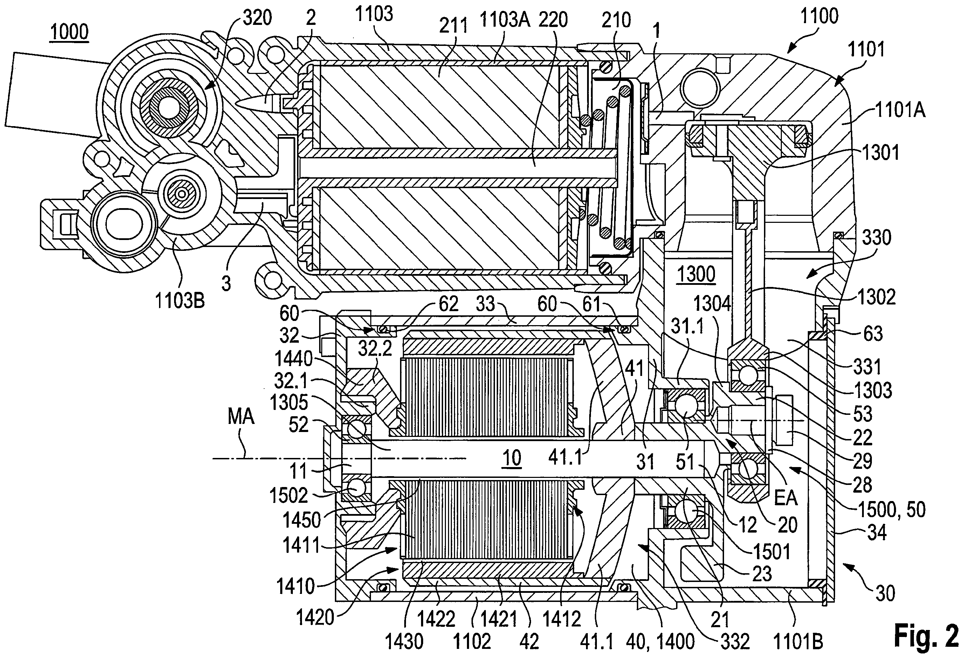

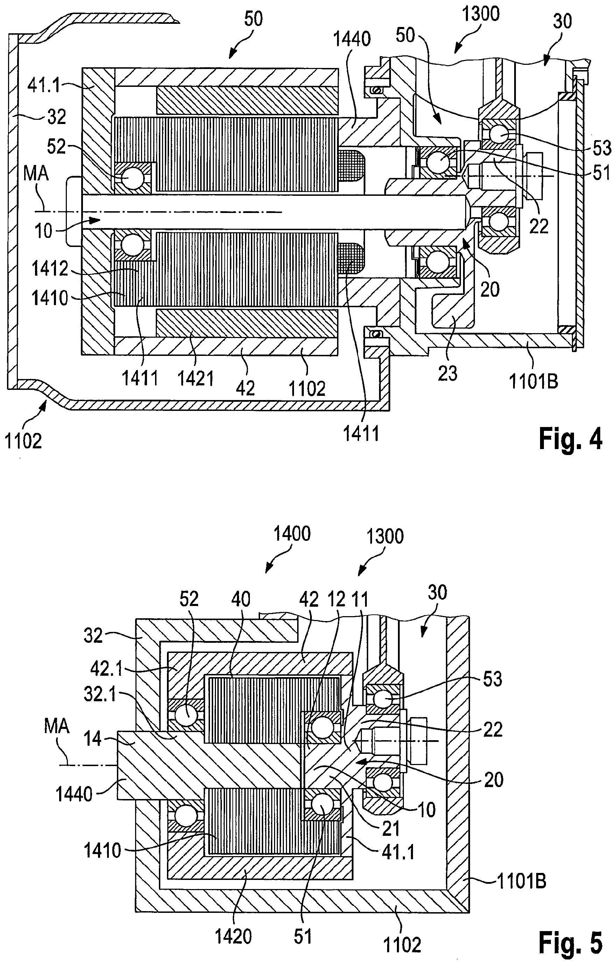

Insbesondere kann der Rotor (Fig. 5) und/oder die Antriebswelle (Fig. 2, 3, 4) in einem zweiten Achslager (B) gelagert sein, das wenigstens teilweise durch die Antriebswelle beabstandet von einem Pleuellager angeordnet ist, insbesondere nur in dem zweiten Achslager gelagert sein.

Das erste und/oder zweite Achslager kann, insbesondere zu Realisierung einer vergleichsweise stabilen Lagerung, außerhalb der Rotorglocke angeordnet ist. Das erste und/oder zweite Achslager kann, insbesondere zu Realisierung einer vergleichsweise bauraumsparenden Lagerung, innerhalb der Rotorglocke angeordnet sein.

Bevorzugt weist der Kompressor ein Pleuel auf, das über eine Kurbelwelle antreibbar ist, wobei die Kurbelwelle an die Antriebswelle gekoppelt ist und wobei die Antriebswelle abtriebsseitig einen exzentrisch zur Achswelle gebildeten Fortsatz aufweist, der die Kurbelwelle bildet. Vorzugsweise ist der Fortsatz einstückig angesetzt.

Es hat sich insbesondere als vorteilhaft erwiesen, dass die Antriebswelle einen Durchmesser unterhalb von 20 mm hat, vorzugsweise unterhalb von 15 mm - in einer besonders bevorzugten Ausführungsform hat es sich als machbar erwiesen, die Antriebswelle mit einem Durchmesser im Bereich von 12 mm oder darunter auszulegen. Dies ist insgesamt einer kompakten Auslegung der Verdichteranordnung und der daran anbindenden Teile der Druckluftversorgungsanlage zuträglich.

Diese konstruktive Auslegung der Verdichteranordnung dient als bevorzugte Basis zur Lagerung der Antriebswelle und/oder des Rotors in Kombination mit der Lagerung eines Pleuels an der Kurbelwelle.

In einer ersten unabhängig von anderen Varianten darstellbaren Variante hat es sich als vorteilhaft erwiesen, dass die Antriebswelle in einem ersten Lager (A-Lager) gelagert, das im Elektromotor, insbesondere in einem Gehäuse des Elektromotors untergebracht ist. Vorzugsweise ist die Antriebswelle nur in dem ersten Achslager gelagert. Letzteres vermeidet statische Überbestimmtheit und lässt sich im Rahmen eines geeignet ausgebildeten Wälzlagers und/oder Nadellagers realisieren. Insbesondere kann dazu vorgesehen sein, eine Gegengewichtlagerung vorzusehen und/oder ein Ausgleichsgewicht an einem drehenden Teil wie der Antriebswelle und/oder der Kurbelwelle vorzusehen.

In einer unabhängig von anderen Varianten realisierbaren, besonders bevorzugten zweiten Variante einer Weiterbildung hat es sich als vorteilhaft erwiesen, dass der Rotor und/oder die Antriebswelle in einem zweiten Achslager (B-Lager) gelagert ist, insbesondere kann es sich als vorteilhaft erweisen, den Rotor und/oder die Antriebswelle nur in dem zweiten Achslager zu lagern. Letzteres vermeidet wiederum statische Überbestimmtheit und lässt sich insbesondere unter Nutzung eines Gegenlagers und/oder Gegengewichts an einem drehenden Teil vorteilhaft realisieren, beispielsweise mit einem Wälzlager und/oder Nadellager.

Sowohl bei der ersten als auch bei der zweiten Variante hat es sich als vorteilhaft erwiesen, dass ein Pleuel zusätzlich an einem Pleuellager zwischen Kurbelwelle und Pleuel gelagert ist.

Die Möglichkeit den Rotor zusätzlich oder alternativ zur Antriebswelle zu lagern erweist sich als vorteilhaft insbesondere im Rahmen der Ausbildung des Elektromotors als Außenläufermotor. Mit besonderem Vorteil versehen, kann der Rotor in einer Ausführungsform an der Rotorglocke zusätzlich oder alternativ zur Antriebswelle gelagert sein, beispielsweise in einem Wälzlager. Dies erhöht die Lagesicherheit der rotierenden Teile der Verdichteranordnung.

Sowohl das erste Achslager als auch das vorgenannte zweite Achslager können mit Vorteil versehen im Elektromotor, d. h. insbesondere in einem Gehäuse des Elektromotors, beispielsweise einem Gehäuseabschluss des Elektromotors oder alternativ im Kompressor, insbesondere in einem Verdichtergehäuse, vorzugsweise in einem Verdichtergehäuseabschluss des Kompressors vorgesehen sein. Als besonders vorteilhaft erweist sich die Anordnung des ersten und/oder zweiten Lagers in einer Gehäusekappe, beispielsweise in einer Gehäusekappe an einem Gehäuseabschluss des Elektromotors oder einer Gehäusekappe an einem Gehäuseabschluss des Kurbelgehäuses des Kompressors.

Im Rahmen einer bevorzugten Weiterbildung kann das erste Achslager (A-Lager) als ein motorabtriebsseitiges Achslager unmittelbar neben einem Pleuellager angeordnet sein; unter einem Pleuellager ist ein Achslager zwischen Kurbelwelle und Pleuel zu verstehen. Zusätzlich oder alternativ kann das zweite Achslager (B-Lager) unmittelbar neben einem Gehäuseabschluss angeordnet sein. Insbesondere kann das zweite Achslager dazu als ein dem motorabtriebsseitigen Achslager gegenüberliegendes Achslager ausgebildet sein.

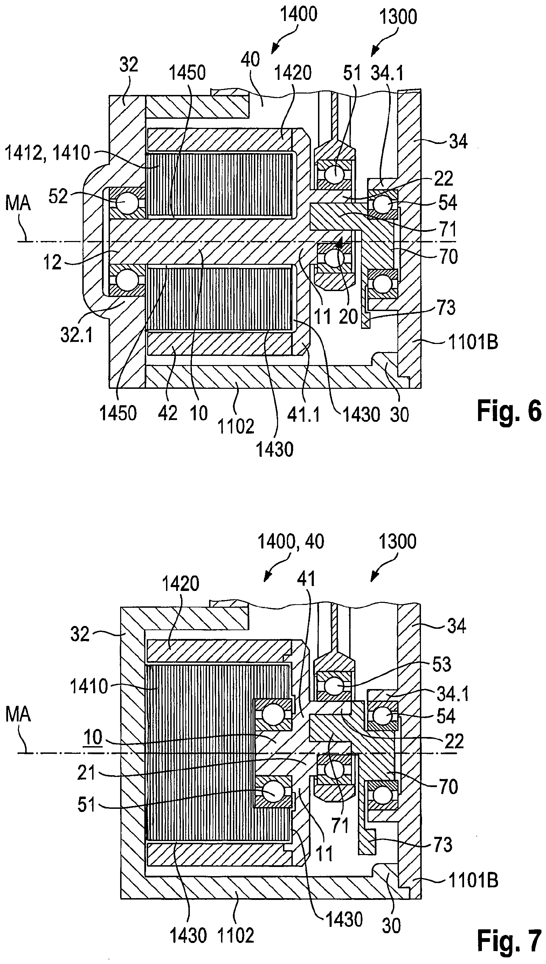

Gleichwohl hat es sich auch als vorteilhaft erwiesen in einer Abwandlung, dass das erste Achslager (A-Lager) als ein motorabtriebsseitiges Achslager unmittelbar neben einem Pleuellager angeordnet und unmittelbar neben einem Gehäuseabschluss angeordnet ist; die letztgenannte Abwandlung ist in einer bevorzugten Ausführungsform der Fig. 6 beschrieben. Die zuerst vorgenannte Abwandlung ist in einer Ausführungsform der Fig. 7 beschrieben.

So kann --vorteilhaft realisiert im Rahmen der Ausführungsform der Fig. 6-generell vorteilhaft das zweite Achslager neben einem Motorgehäuseabschluss, insbesondere als ein dem motorabtriebsseitigen Achslager gegenüberliegendes Achslager gegenüber eine Abtriebsseite des Motors angeordnet sein.

Die insbesondere in Fig. 7 dargestellte Ausführungsform folgt generell der bevorzugten Weiterbildung, dass das zweite Achslager neben einem Kompressorgehäuseabschluss, insbesondere als ein dem motorabtriebsseitigen Achslager gegenüberliegendes Lager, auf einer Abtriebsseite des Motors angeordnet ist.

So kann --ähnlich wie in der Ausführungsform der Fig. 7-- generell das Pleuellager unmittelbar zwischen dem ersten und zweiten Achslager angeordnet sein. Zusätzlich oder alternativ kann das Pleuellager auch, beispielsweise wie in Fig. 6 erläutert, neben dem ersten Achslager und mittelbar neben dem zweiten Achslager angeordnet sein; dazu kann beispielsweise das Pleuellager und das zweite Achslager durch eine Antriebswelle und/oder den Rotor beabstandet sein.

Als besonders bevorzugte Form eines Lagers zur Ausführung des ersten und/oder zweiten Lagers hat sich ein Wälzlager erwiesen. Insbesondere für den Fall, dass das erste und/oder zweite Achslager einziges Achslager der Antriebswelle und/oder des Rotors sein sollte, hat es sich als vorteilhaft erwiesen, das Achslager als Lagerhülse auszuführen.

In einer besonders bevorzugten Weiterbildung ist vorgesehen, dass die Antriebswelle in einer Lagerhülse, insbesondere in Form eines Nadellagers im Elektromotor gelagert ist. Vorzugsweise kann nur die Lagerhülse vorgesehen sein, wobei ein Pleuel zusätzlich an einem Pleuellager zwischen Kurbelwelle und Pleuel gelagert ist.

Es hat sich im Rahmen einer besonders bevorzugten Weiterbildung als vorteilhaft erwiesen, dass das Pleuellager und/oder das erste Achslager und/oder das zweite Achslager ein Ausgleichsgewicht aufweisen. Ein Ausgleichsgewicht ist vorteilhaft zwischen dem Pleuellager und dem ersten Achslager an der Antriebswelle motorabtriebsseitig und exzentrisch zur Achswelle gebildet. Ein Ausgleichsgewicht kann zusätzlich oder alternativ zwischen dem Pleuellager und dem zweiten Achslager an der Antriebswelle und/oder der Kurbelwelle motorabtriebsseitig und exzentrisch zur Achswelle gebildet sein.

Bevorzugt ist das erste Achslager (A-Lager) als ein motorabtriebsseitiges Achslager an einer Zwischenwandung des Antriebsgehäuses festgelegt.

Zusätzlich oder alternativ kann das zweite Achslager (B-Lager) als ein einem motorabtriebsseitigen Achslager gegenüberliegendes Achslager an einer dem Elektromotor zugeordneten Gehäuseaußenwand des Antriebsgehäuses, insbesondere einer Ausstülpung derselben, vorzugsweise einer Gehäusekappe, festgelegt sein, insbesondere neben einem Elektromotorgehäuseabschluss.

Zusätzlich oder alternativ kann das Gegenachslager als ein motorabtriebsseitiges Achslager an einer weiteren dem Kurbeltrieb zugeordneten Gehäuseaußenwand des Antriebsgehäuses, insbesondere einer Ausstülpung derselben, vorzugsweise einer Gehäusedeckplatte, festgelegt sein, insbesondere neben einem Kompressorgehäuseabschluss.

Im Rahmen einer weiteren besonders bevorzugten Weiterbildung hat es sich als vorteilhaft erwiesen, dass der Stator und/oder der Rotor über einen Kragträger gehalten sind, der einen gewölbten Kragarm-Abschnitt mit in etwa V-förmigem Querschnitt aufweist. Grundsätzlich verläuft der Kragarm-Abschnitt quer zur Antriebswelle. Zur Halterung des Stators schließt der Kragträger einerseits bevorzugt an einem Motorgehäuseabschluss und andererseits an dem Stator an mit einem quer zur Achswelle der Antriebswelle verlaufenden Kragarms.
In einer ersten Abwandlung kann ein erster Kragarm-Abschnitt für den Stator am Antriebsgehäuse ansetzen.

Zusätzlich oder alternativ kann in einer zweiten Abwandlung ein zweiter Kragarm-Abschnitt für den Rotor an der Antriebswelle und/oder dem Hubzapfen ansetzen.

Beispielsweise kann in beiden Fällen insbesondere der erste und/oder zweite Kragarm-Abschnitt einstückig oder mittels Presssitz oder dergleichen Reib- und/oder Formschluss-Verbindung gehalten sein.

Zur Ausbildung des Kragträgers am Rotor schließt dieser vorteilhaft einseitig am Rotor und andererseits an der Antriebswelle in Form eines quer zur Achswelle der Antriebswelle verlaufenden Kragarms an. Die den Rotor bzw. den Stator anschließende Krackarme liegen sich bevorzugt gehäuseabschlussseitig bzw. abtriebsseitig gegenüber, insbesondere beabstandet durch den Stator.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 ein Schaltschema einer Druckluftversorgungsanlage gemäß einer besonders bevorzugten Ausführungsform;
Fig.2 eine erste Ausführungsform einer Druckluftversorgungsanlage mit einer ersten besonders bevorzugten Ausführungsform einer Verdichteranordnung mit Motor in einem integrierten Antriebsgehäuse;
Fig. 3 eine zweite Ausführungsform einer Druckluftversorgungsanlage mit einer zweiten besonders bevorzugten Verdichteranordnung mit Motor in einem integrierten Antriebsgehäuse;
Fig. 4 ein schematisch dargestellter Ausschnitt eines kombinierten Motorgehäuses und Kurbelgehäuses unter Bildung eines integrierten Antriebsgehäuse für eine abgewandelte Verdichteranordnung ausgehend von Fig. 3;
Fig. 5 ein schematisch dargestellter Ausschnitt eines kombinierten Motorgehäuses und Kurbelgehäuses unter Bildung eines integrierten Antriebsgehäuse für eine in Bezug auf Fig. 4 weiter abgewandelte Verdichteranordnung;
Fig. 6 ein schematisch dargestellter Ausschnitt eines kombinierten Motorgehäuses und Kurbelgehäuses unter Bildung eines integrierten Antriebsgehäuse für eine abgewandelte Verdichteranordnung ausgehend von Fig. 2;
Fig. 7 ein schematisch dargestellter Ausschnitt eines kombinierten Motorgehäuses und Kurbelgehäuses unter Bildung eines integrierten Antriebsgehäuse für eine in Bezug auf Fig. 6 weiter abgewandelte Verdichteranordnung, insbesondere mit einer variierten Lageranordnung für Antriebswelle und Kurbelwelle sowie in Bezug auf eine Weiterbildung der Kurbelwelle mit einem Ausgleichsgewicht;
Fig. 8 ein schematisch dargestellter Ausschnitt eines kombinierten Motorgehäuses und Kurbelgehäuses unter Bildung eines integrierten Antriebsgehäuse für eine in Bezug auf Fig. 6 weiter abgewandelte Verdichteranordnung, insbesondere mit einer variierten Halterung eines Lagers und Halterung eines Stators;
Fig. 9 ein schematisch dargestellter Ausschnitt eines kombinierten Motorgehäuses und Kurbelgehäuses unter Bildung eines integrierten Antriebsgehäuse für eine Verdichteranordnung gemäß einer dritten besonders bevorzugten Ausführungsform.

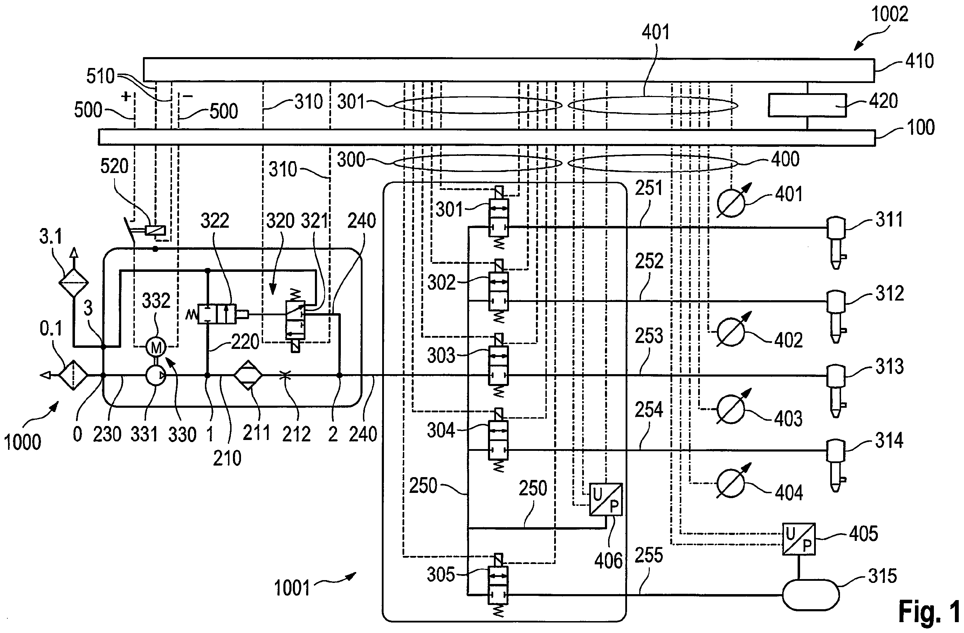

Fig. 1 zeigt eine Druckluftversorgungsanlage 1000, die vorliegend zur Versorgung einer Pneumatikanlage 1001 in Form einer Luftfilteranlage eines Pkw-Fahrzeugs ausgelegt ist. Die Druckluftversorgungsanlage 1000 weist eine Verdichteranordnung mit einem Verdichter und einer Zuführleitung 230 zu der Druckluftzuführung 1 auf. Über die pneumatische Zuführleitung 230 kann über einen Filter 0.1 und eine Luftzuführung 0 Umgebungsluft angesaugt werden und dem Verdichter 330 zugeführt werden. Der Verdichter 330 weist dazu einen von einem Elektromotor 332 angetriebenen Kompressor 331 auf. An die Druckluftzuführung 1 schließt sich eine Pneumatikhauptleitung 210 zum Druckluftanschluss 2 an, über welche mittels dem Verdichter 330 verdichtete Druckluft der Pneumatikanlage 1001 zuführbar ist. Die Pneumatikanlage 1001 ist dazu mit dem Druckluftanschluss über eine weitere pneumatische Leitung 240 verbunden, welche an eine Galerie 250 anschließt, von der wiederum Zweigleitungen 251, 252, 253, 254, 255 abgehen. In den Zweigleitungen 251 bis 255 sind 2/2-Wegeventile 301, 302, 303, 304, 305 angeordnet, um eine Zuführung der Druckluft zu einem Balg einer Luftfeder 311, 312, 313, 314 bzw. einem Druckluftreservoir 315 zu regeln. An die Galerie 250 angeschlossen ist ebenfalls ein Spannungsdrucksensor 406 bzw. direkt an das Druckluftreservoir 315 angeschlossen ist ein weiterer Spannungsdrucksensor 405. Den Luftfedern bzw. dem zugeordneten 2/2-Wegeventil 301 bis 305 ist jeweils ein Wegesensor 401, 402, 403, 404 für die Vorderachse und Hinterachse zugeordnet.

Der Schaltzustand der 2/2-Wegeventile 301 bis 305 kann über Steuerstromleitungen 300 eingestellt werden, welche an ein Bordnetz 100 des Druckluftversorgungssystems 1002 anschließen und die über eine Fahrzeugsteuerung bzw. von der Fahrzeugsteuerung 410 ausgehende Signalleitungen 301 aktuiert werden. Ähnlich werden die genannten Sensoren 401 bis 406 über Signalleitungen 401 mit der Fahrzeugsteuerung 410 (ECU) aktuiert und mit Strom über Sensorleitungen 400 versorgt.

Signale der Signalleitungen 301, 401 werden auch einem Fahrzeugbus 420, hier in Form eines CAN-Bus, zur Verfügung gestellt.

Der Betrieb der Druckluftversorgungsanlage 1000 ergibt sich wie folgt. Über eine Relaissteuerleitung 510 zwischen Fahrzeugsteuerung 410 (ECU) und einem Relais 520 zur Steuerung des Verdichters 330 wird der Verdichter zur Erzeugung von Druckluft aktuiert; das Relais 520 erhält dazu eine Stromversorgung über die Stromleitungen 500 und nach Maßgabe des Bordnetzes 100. Die der Druckluftzuführung 1 zur Verfügung stehende Druckluft wird in der Pneumatikhauptleitung 210 über einen Lufttrockner 211 und eine Drossel 212 zum Druckluftanschluss 2 geführt und dann weiter über die weitere pneumatische Leitung 240 der Galerie 250 der Pneumatikanlage 1001 zur Verfügung gestellt.

Zum Entlüften der Pneumatikanlage 1001 und/oder der Druckluftversorgungsanlage 1000 bzw. von pneumatischen Teilen derselben kann in umgekehrter Richtung Druckluft vom Druckluftanschluss 2 über die Drossel 212 und unter Regeneration des Lufttrockners 211 in der Pneumatikhauptleitung 210 geführt werden; die weitere Entlüftung erfolgt hier unter Abzweigung der zu entlüftenden Druckluft an der Druckluftzuführung 1 in eine Entlüftungsleitung 220.

Dazu wird ein vorgesteuertes Entlüftungsventil 322 von einem in der pneumatischen Steuerleitung 240 befindlichen Steuerdruck aktuiert, indem das Steuerventil 321 die pneumatische Steuerleitung 240 zum Betätigungskolben des Entlüftungsventils 322 öffnet. Dazu ist das Steuerventil 321 über eine Entlüftungsventilsteuerstromleitung 310 ansteuerbar, d. h. die Magnetspule desselben ist bestrombar und überführt das Steuerventil 321 von der ersten Schaltposition zur zweiten Schaltposition gegen die Federkraft einer symbolisch dargestellten Feder des Steuerventils 321.

Es versteht sich, dass das in Fig. 1 gezeigte und beschriebene Druckluftversorgungssystems 1002 lediglich beispielhaft zur Verdeutlichung einer grundsätzlichen Funktionsweise eines allgemeinen Druckluftversorgungssystems dient und vielfältige Abwandlungen um Modifikationen zur Sache möglich sind. Beispielsweise kann in der Pneumatikhauptleitung 210 als Teil der Ventilanordnung 320 umfassend das Steuerventil 321 und das Entlüftungsventil 322 auch ein entsperrbares Rückschlagventil vorgesehen sein, das vorliegend nicht näher in der Fig. 1 gezeigt ist.

Unabhängig von dem vorgenannten Aspekt können insbesondere im Rahmen der Abwandlungen um Modifikationen gemäß dem Konzept der Erfindung anstatt oder in Ergänzung des Relais 520 andere elektrische und/oder elektronische Komponenten, insbesondere am Bordnetz 100, betrieben werden; in Bezug auf diesen Aspekt sind bevorzugte Ausführungsformen der Erfindung erläutert. Insbesondere sind verschiedene Varianten eines Bordnetzes möglich, die zum Betreiben des Verdichters 330, d. h. hier eines Elektromotors 332 zum Betreiben des Kompressors 331, vorteilhaft sind.

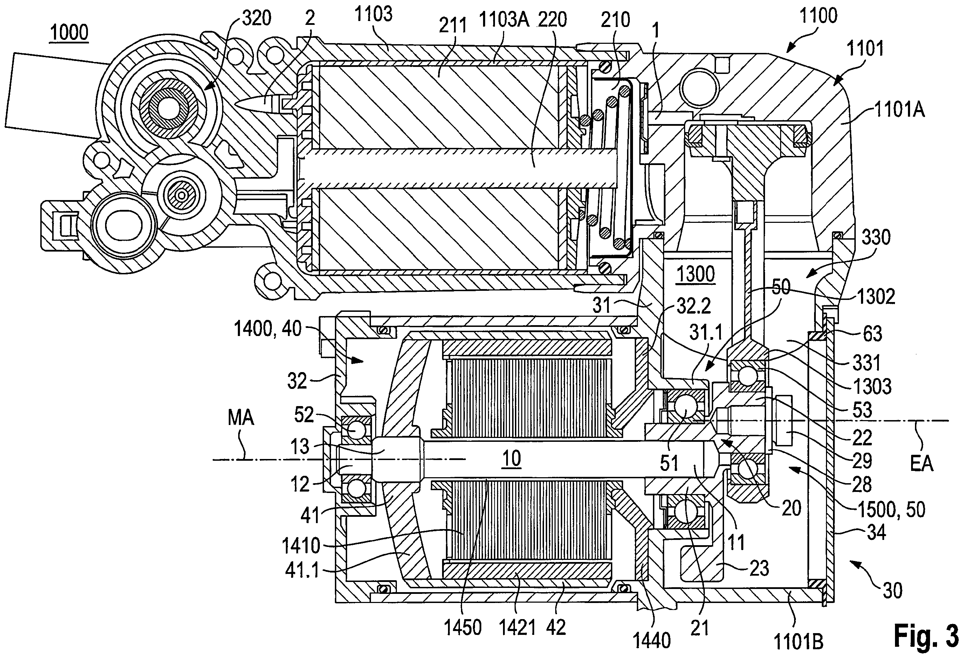

Fig. 2 zeigt im Rahmen einer ersten Variante einer besonders bevorzugten Ausführungsform eine konstruktive Realisierung einer Druckluftversorgungsanlage 1000. Für gleiche oder ähnliche Merkmale bzw. Merkmale gleicher oder ähnlicher Funktion werden der Einfachheit halber gleiche Bezugszeichen wie in dem Schema der Druckluftversorgungsanlage 1000 der Fig. 1 verwendet. In den Konstruktionsdarstellungen der Fig. 2 und Fig. 3 einer Druckluftversorgungsanlage 1000 bzw. den schematischen Ausschnittsdarstellungen des Motorgehäuses 1102 und Kurbelgehäuses 1101B der Fig. 4 bis Fig. 9 sind die vorgenannten Anordnungen wie folgt erkennbar.

In der konstruktiven Darstellung der Druckluftversorgungsanlage 1000 der Fig. 2 ist die Gehäuseanordnung 1100 derselben mit einem Antriebsgehäuse 30 erkennbar zur Ausführung des Verdichters 330 umfassend den Kompressor 331 und den Elektromotor 332, wobei in dem Antriebsgehäuse 30 der Antrieb 1400 in Form eines elektronisch kommutierten, bürstenlosen Elektromotors 40--hier Gleichstrom-Motor (BL-DC Motor)-- und der Kurbeltrieb 1300 untergebracht ist.

Die Gehäuseanordnung 1100 umfasst dazu ein Kompressorgehäuse 1101 für den Kompressor 331 mit einem Kolbengehäuse 1101A und einem Kurbelgehäuse 1101B. An dem Kurbelgehäuse 1101B des Kompressorgehäuses 1101 schließt ein Motorgehäuse 1102 zur Darstellung des Elektromotors 332 an. Am Kolbengehäuse 1101A schließt ein Trockner- und Ventilgehäuse 1103 umfassend das Trocknergehäuse 1103A --zur Darstellung des Lufttrockners 211-- und das Schaltgehäuse 1103B umfassend elektrische und/oder elektronische und pneumatische Schnittstellen zusammen mit einer Mechatronik sowie einer Anordnung von Ventilen --im Wesentlichen zur Darstellung der Ventilanordnung 320. Ohne die konstruktiven Einzelheiten im Detail zu erläutern, ist aus Fig.2 ohne weiteres erkennbar, dass auf diese Weise in dem Ventil- und Trocknergehäuse 1103 die Ventilanordnung 320 und der Lufttrockner 211 mit einem in Fig. 1 bezeichneten System pneumatischer Leitungen --insbesondere umfassend die Pneumatikhauptleitung 210 und die Entlüftungsleitung 220 zwischen der Druckluftzuführung 1 und dem Druckluftanschluss 2 bzw. dem Entlüftungsanschluss 3-- umgesetzt ist.

In dem Kolbengehäuse 1101A ist ein hin- und her-bewegbarer Kolben 1301 an einem Pleuel 1302 eines Kurbeltriebs 1300 gehalten. Das als eine Pleuelstange ausgelegte Pleuel 1302 selbst ist an einer weiter unten bezeichneten Kurbelwelle über ein Pleuellager gelagert, die hier als Exzenterwelle 1304 bzw. Exzenterlager 1303 des Kurbeltriebs 1300 bezeichnet sind.

Der mit dem Elektromotor 332 gebildete Antrieb 1400 für den Kurbeltrieb 1300 und der Kurbeltrieb 1300 sind im Wesentlichen in dem Motorgehäuse 1102 und dem Kurbelgehäuse 1101B untergebracht. Der Antrieb 1400 selbst, weist zur Bildung des Elektromotors 332 einen Stator 1410 mit einer Statorwicklung 1411 auf einem Anker 1412 oder dergleichen Joch --hier ein Blechpaket-- auf. Des Weiteren weist der Antrieb 1400 einen Rotor 1420 mit einer Rotorglocke 1422 und einer daran angebrachten Anordnung von Permanentmagneten 1421 auf.

Die Rotorglocke 1422 umfasst hier wenigstens einen Rotorflansch 41, einen Kragarm-Abschnitt 41.1 zur Bildung eines Kraggewölbes und einen daran einstückig oder schlüssig angesetzten, hier zylindrischen, Rotormantel 42.

Zur Ausbildung des Motors 332 in Form eines Außenläufermotors für den Antrieb 1400 ist der Stator 1410 getrennt durch einen Luftspalt 1430 im Rotor 1420 gehalten und vom Rotor 1420 rotierbar umgeben. Der Rotor 1420 ist hier an einer Achswelle 1305 und mit dieser drehbar gehalten, während der Stator 1410 von einer Tragkonstruktion 1440 gehalten ist. Die drehbare Achswelle 1305 und Kurbelwelle 1304 sowie das Pleuel 1302 bilden die wesentlichen kraftübertragenden Elemente des durch den Antrieb 1400 angetriebenen Kurbeltriebs 1300, wobei diese in einer Lagerung 1500 gehalten sind. Die Lagerung 1500 umfasst ein A-Lager 1501, ein B-Lager 1502 und ein Exzenterlager 1303 zur Ausführung einer rotierenden Bewegung der Achswelle 1305 bzw. Kurbelwelle 1304 sowie einer Hin- und Herbewegung des Pleuels 1302. Im Einzelnen werden dazu im Folgenden die Teile des Kurbeltriebs 1300, der Lagerung 1500 sowie der Halterung 1440 bzw. des Rotors 1420 sowie des Antriebsgehäuses 30 --d.h. Motorgehäuse 1102 und Kurbelgehäuse 1101B-- unter Bezug auf die auch für die folgenden Fig. 3 bis Fig. 9 geltenden Bezugszeichen erläutert.

Die als Antriebswelle 10 ausgeführte Achswelle 1305 ist zentriert zu einer Motorachse MA angeordnet und drehbar im Stator 1410 gehalten, nämlich mittels der zuvor bezeichneten Wälzlager 1502, 1501, die hier als Achslager 51, 52 der Lageranordnung 50 genannt sind. Konkret ist die Antriebswelle 10 an einem Gehäuse abschlussseitigen verjüngten Zapfen 11 im zweiten Achslager 52 (B-Lager) direkt drehend gehalten und trägt an ihrem nicht verjüngten gegebenenfalls aufgedickten zweiten Ende 12 einen Hubzapfen 20 zur Darstellung der Kurbelwelle 1304. Dieser Hubzapfen 20 ist vorliegend durch Presssitz auf der Antriebswelle 10 reib- und/oder formschlüssig festgesetzt und mit der Antriebswelle 10 drehbar. Der Hubzapfen 20 wiederum ist in dem ersten Achslager 51 (A-Lager) direkt drehbar gehalten, so dass die Antriebswelle 10 über den Hubzapfen 20 im ersten Achslager 51 mittelbar gelagert ist. Das erste Achslager 51 als auch das zweite Achslager 52 sind noch praktisch innerhalb des Motorgehäuses 1102 angeordnet, wobei das erste Achslager 51 in einer den Kurbelgehäuse 1101B angrenzenden oder als Teil desselben gebildeten ersten Gehäusewand 31 und das zweite Achslager 52 in einer der Abtriebsseite gegenüberliegenden Gehäuseaußenwand 32 des Motorgehäuses 1102 zentriert gehalten ist. Die Gehäuseaußenwand 32 ist vorliegend in Form einer Abschlusskappe für das Motorgehäuse zur Motorgehäuseaußenseite gebildet. Die erste Gehäusewand 31 ist vorliegend als ein Teil des Kurbelgehäuses 1101B gebildet, wobei an die erste Gehäusewand 31 ein ringzylindrischer Gehäuseteil 33 angeschlossen ist, auf den bzw. in den die vorgenannte Gehäusekappe eingesetzt werden kann. Über das Kurbelgehäuse 1101B wiederum besteht Zugriff auf das Kurbelgetriebe 1300, nämlich über die im Kurbelgehäuse 1101B in etwa der Verlängerung der Motorachse MA und abtriebsseitig aufgesetzten Gehäuse-Deckplatte 34. Zwischen der Abschlusskappe 32 und dem zylindrischen Motorgehäuseteil 33 bzw. zwischen Letzterem und der ersten Gehäusewand 31 bzw. zwischen der Gehäuse-Deckplatte 34 und dem übrigen Teil des Kurbelgehäuses 1101B ist jeweils eine Dichtung, insbesondere in Form einer Ringdichtung oder Lippringdichtung 61, 62, 63 eingelegt, so dass durch die Dichtungsanordnung 60 der vorgenannten Dichtungen 61, 62, 63 das Motorgehäuse 1102 und das Kurbelgehäuse 1101B --hier als Antriebsgehäuse 30 bezeichnet-- luft- und flüssigkeitsdicht abgeschlossen ist.

Die zentrische Festsetzung des ersten und zweiten Achslagers 51, 52 zur Motorachse MA erfolgt vorliegend in zylindrischen Ausstülpungen 31.1 bzw. 32.1 der ersten und zweiten Gehäusewände 31, 32, in welche die Achslager 51, 52 eingesetzt sind. Die erste und zweite Gehäusewand 31, 32 dient somit in vorteilhafter Weise, auch unter Berücksichtigung der Dichtungen 61, 62 als Dämpfungselemente, dazu die Antriebswelle 10 über die ersten und zweiten Achslager 51, 52 zentriert und mit gewisser Vibrationsdämpfung zu halten.

Weiter trägt die Antriebswelle 10 benachbart zum ersten Ende 11 aufgesetzten Hubzapfen 20 einen im Querschnitt in etwa V-förmigen Rotorflansch 41, an den zur Bildung eines in etwa V-förmigen Kragträgers ein zylindrischer und im Querschnitt in etwa quer zu einer Motorachse MA der Antriebswelle verlaufender Kragarm-Abschnitt 41.1 in Form eines Kraggewölbes angeformt ist. An dem Kragarm-Abschnitt 41.1 ist wiederum ein zylindrischer und im Querschnitt als erster und zweiter Schenkel parallel zur Motorachse MA ersichtlicher zylindrischer Körper einer Rotormantel 42 angeschlossen zur Bildung der vorbezeichneten Rotorglocke 1422, an der wiederum die Anordnung von Permanentmagneten 1421 angebracht ist. Der Rotorflansch 41 ist im vorliegenden Fall wie der Hubflansch 21 des Hubzapfens 20 durch Presssitz am ersten Ende 11 der Antriebswelle 10 aufgebracht. In einer Abwandlung können die hier als Flansche 21, 41 mit Pressverbindung bezeichneten Verbindungen auch als einstückige Verbindung mit der Antriebswelle 10 ausgeführt sein - anders ausgedrückt kann die Antriebswelle 10 mit den Flanschen 21, 41 sowie gegebenenfalls den daran anschließenden Kragarm-Abschnitt 41.1 und gegebenenfalls Rotormantel 42 und/oder Hubzapfen 20 einstückig gebildet sein.

Der Hubzapfen 20 weist außerdem einen exzentrisch auf einer Exzenterachse EA zentrierten Hubsockel 22 und ein diesen gegenüber der Motorachse MA gegenüberliegendes Ausgleichsgewicht 23 auf, so dass sich die Unwucht des Hubsockels 22 und des Ausgleichsgewichts 23 bei drehender Betätigung des Hubzapfens 20 in etwa ausgleichen - dabei ist auch in etwa das Gewicht einer Schraube 29 in Hubstutzen 22 berücksichtigt, welche bei Anzug unter Druckausübung auf eine Unterlegscheibe 28 ein Pleuellager 53 der Lageranordnung 50 auf dem Hubstutzen 22 hält. Am Pleuellager 53 ist das vorbezeichnete Pleuel 1302 an einer dort mit 1303 bezeichneten Lageröffnung eines Auglocks oder dergleichen gelagert. Die Lageranordnung 50 des ersten und zweiten Achslagers 51, 52 bzw. des Pleuellagers 53 sieht zunächst die unmittelbar nebeneinander angeordnete Ausrichtung des ersten Achslagers 51 und des Pleuellagers 53 am Hubzapfen 20 --das erste Achslager 51 auf dem Hubflansch 21, das Pleuellager 53 auf dem Hubbolzen 22-- vor; diese abtriebsseitig des Motors 40 dem ersten Ende 11 der Antriebswelle 10 zugeordnet. Dem der Abtriebsseite gegenüberliegenden zweiten Ende 12 der Antriebswelle 10 zugeordnet ist das zweite Achslager 52 (B-Lager). Im vorliegenden Fall ist sowohl das erste als auch das zweite Achslager 51, 52 außerhalb des Stators 1410 und auch außerhalb des Rotors 1420 des Antriebs 1400 angeordnet, befindet sich somit insbesondere --relativ zu einer Erstreckung der Motorachse MA gesehen-- außerhalb der Erstreckung der Rotormantel 42. Dies hat insbesondere Vorteile hinsichtlich der Stabilität einer Lagerung der Antriebswelle 10, da diese praktisch an ihren Endpunkten, nämlich am äußersten Ende des ersten Endes 11 der Antriebswelle 10 sowie am äußersten Ende des zweiten Endes 12 der Antriebswelle 10 gelagert ist. Zudem sind Gleichlaufschwankungen bei drehender Betätigung der Antriebswelle 10 und des Hubzapfens 20 durch eine enge Nachbarschaft des ersten Achslagers 51 und Pleuellagers 53 sowie der einander gegenüberliegenden Gewichtsmomente des Ausgleichsgewichts 23 und des Hubbolzens 22 vergleichsweise gering gehalten.

Das erste Achslager 51 und das Pleuellager 53 können mit den daran anschließenden Bauteilen vergleichsweise einfach über den Zugang einer Gehäuse-Deckplatte 34 im Kurbelgehäuse 1101B montiert werden. Das zweite Achslager 52 kann vergleichsweise einfach unter Abnehmen der Gehäusekappe 32 am motorseitigen zylindrischen Teil 33 des Antriebsgehäuses 30 montiert werden. An der vorgenannten Gehäusekappe 32 schließt vorliegend auch die zuvor als Tragkonstruktion 1440 bezeichnete Kragarmträgerhalterung 32.2 an. Die Kragarmträgerhalterung 32.2 zum Tragen des Stators 1410 ist konzentrisch um die zylindrische Ausstülpung 32.1 an der Gehäusekappe 32 gebildet und übergreift diese in Richtung der Motorachse MA unter Belassen eines Luftspalts 1450 zwischen Antriebswelle 10 und Tragarmkonstruktion 1440.

Die Gehäuseabdeckung zur Außenseite des Motorgehäuses 1102 ist insofern in Form eines Lagerschildes gebildet um einerseits als Lageraufnahme für das zweite Achslager 52 und zum Anderen zur Anbringung der Kragarmkonstruktion 1440 zu dienen.

In einer Abwandlung der ersten Variante kann das zweite Achslager 52 näher an den Stator 1410 herangerückt werden, insbesondere im Joch 1412 bzw. Blechpaket sowie der Wicklung 1411, d. h. im Bauraum derselben, untergebracht werden (beispielsweise wie schematisch in Fig. 4 gezeigt). Auch kann in einer zweiten Abwandlung das erste Achslager 51 so ausgefüllt sein, dass der Rotorflansch 41 des Kragarm-Abschnitts 41.1, insbesondere der Rotormantel 42, auf oder mit dem Hubflansch 21 des Hubzapfens 20 kombiniert oder mit diesem einstückig gebildet oder auf diesem zu liegen kommt. Beide Abwandlungen führen zu einer Verkürzung der Baulänge entlang der Erstreckung der Antriebswelle 10, weil der Bauraum des ersten und zweiten Achslagers 51, 52 in axialer Richtung auf den Bauraum des Rotorflansches 41 bzw. Hubzapfenflansches 21 und/oder des Stators 1410 reduziert wird.

In allen vorgenannten Fällen bietet die in Fig. 2 und auch die in Fig. 3 dargestellte bevorzugte Variante eine Ausführungsform die Möglichkeit, einen Rotor 1420 besonders gut gegen Berührung und Verschmutzung von außen zu schützen und darüber hinaus den gesamten Motor EMV-gerecht zu kapseln. Bei der in Fig. 2 und Fig. 3 dargestellten konstruktiven Auslegung ist der Anker 1412 bzw. das dem zugeordnete Blechpaket sowie die Statorwicklung 1411 nicht mehr notwendigerweise zur Aufnahme von Lagerkräften auszubilden. Damit entfällt eine Beeinträchtigung des magnetischen Flusses durch Lagerausschnitte im Blechpaket des Ankers 1412. Vielmehr werden vorliegend die erforderlichen Lagerkräfte für die Lageranordnung 50 vollständig im Antriebsgehäuse 30 aufgenommen. Auch bietet diese konstruktive Ausführung die Möglichkeit, die Lagergröße der Achslager 51, 52, 53, 54 in verbesserter Weise auszuführen, da diese nicht mehr vom Stator 1410 beschränkt sind, insbesondere nicht mehr auf den Bauraum des Jochs 1412 bzw. der Statorwicklung 1411 beschränkt ist. Damit kann der Rotor 1420 in optimierter Weise auf das Verhältnis von Masse zu Trägheitsmoment ausgelegt werden. Dies führt zu einem besonders guten Ansatz Gleichlaufschwankungen zu vermeiden unter Ausnutzung des vergleichsweise hohen Trägheitsmoments des Rotors 1420 mit der vorgenannten konstruktiven Auslegung einer Rotormantel 42.

Insgesamt ergibt sich eine deutlich verbesserte Effizienz des Verdichters 330, insbesondere des Elektromotors 332. Damit ist auch der Gesamtwirkungsgrad der Druckluftversorgungsanlage 1000 um ein erhebliches Maß verbessert. Dazu trägt auch ein deutlich verbessertes Leistungsgewicht mit erheblich reduziertem Bauraumvolumen bei. Leistungssteigerungen bis zur 5-fachen Leistung bisheriger bürstenbehafteter Motoren bei Nennspannung ist möglich. Durch Entfall des Kohleverschleißes im Vergleich zum bürstenbehafteten Motor ergibt sich eine deutlich verlängerte Lebensdauer des bürstenlosen Motors, dies ohne Gefahr einer Verschmutzung des Verdichters 330 als auch des Trockners 211 durch Bürstenabrieb.

Durch eine den Weiterbildungen entnehmbare Ansteuerschaltung im Mechatronikteil der Druckluftversorgungsanlage 1000 oder auch extern davon -- insbesondere einer elektronischen Ansteuerschaltung zur elektronischen Kommutierung des bürstenlosen Motors und/oder Drehzahleinstellung im Druckregelbetrieb und/oder zur Umsetzung einer Sanftanlaufregelung und/oder zur Anpassung einer Bordnetzspannung-- ist es möglich die Ansteuerung des Motors synergetisch vorzunehmen; d. h. bei Mehrfunktion kostenneutral. Beispielsweise können so Drehzahländerungen über den Füllvorgang bis auf 100 U/min vorgegeben durch den Elektromotor 332 gesteigert werden. Dabei kann eine solche Drehzahl unabhängig von einer Versorgungsspannung des Bordnetzes einstellbar sein. Insgesamt ergibt sich ein sehr guter Rundlauf auch bei relativ niedrigen Drehzahlen. In jedem Fall kann das Anlaufverhalten über geeignete Regler gut beeinfluss werden.

Zudem bietet die in Fig. 2 dargestellte Ausführungsform den Vorteil, dass diese kompatibel mit einer Vielzahl von Gehäuseanordnungen 1101A, 1103 eines Kolbengehäuses bzw. Trockners sind.

Fig. 3 zeigt eine zweite Variante einer bevorzugten Ausführungsform einer Druckluftversorgungsanlage 1000, bei welcher in Anbetracht identischer Ausführung des Trocknergehäuses 1103 und Kolbengehäuses 1101A für gleiche Teile bzw. Merkmale bzw. Teile mit gleicher oder ähnlicher Funktion, gleiche Bezugszeichen benutzt sind. Insbesondere wird dazu auf die Beschreibung der Fig. 2 Bezug genommen. Im Folgenden werden daher vor allem die Unterschiede der zweiten Variante im Vergleich zur ersten Variante der Verdichteranordnung erläutert.

Dazu zeigt Fig. 3 weiter den Kurbeltrieb 1300 sowie den Antrieb 1400 mit dem Elektromotor 40 und dem Verdichtergehäuse 30. Wiederum Bezug genommen wird auf die Antriebswelle 10 mit einem ersten Ende 11 und zweiten Ende 12 sowie darauf aufgebrachten Achslagern 51, 52, letzteres direkt und ersteres über den Hubflansch 21 des Hubzapfens 20, an den wiederum das Pleuellager 53 der Lageranordnung angebracht ist. Insofern sieht die zweite Variante der Ausführungsform wie sie in Fig. 3 dargestellt ist ebenfalls eine außenliegende Anordnung der Achslager 51, 52 am äußersten Ende der Antriebswelle 10 vor als auch in etwa die gleiche Ausführung einer Übersetzung zwischen Antriebswelle 10 und Hubzapfen 20 mit erstem Achslager 51 und Pleuellager 53.

Allerdings ist die Halterung des Stators 1410 diesmal im abtriebsseitigen Teil des Motors 40 zugeordnet, während die Anbringung des Rotorflansches 41 dem nach außen weisenden Gehäuseabschluss 32 zunächst benachbart ist. Insofern ist die axiale Anordnung des Stators 1410 und des Rotors 1420 an einer Senkrechten zur Motorachse MA gespiegelt. Der Rotorflansch 41 und der Hubzapfenflansch 21 sind nunmehr durch den Stator 1410 beabstandet. Der Rotorflansch 41 ist unmittelbar benachbart zum zweiten Achslager 52 auf einem verdickten Teil 13 der Antriebswelle 10 angebracht, welcher sich unmittelbar an dem verjüngten Endteil 12 der Antriebswelle anschließt. Die offene Seite der Rotormantel 42 weist in Richtung der Abtriebsseite des Motors 40 während die Kragarmwölbung 41.1 des Rotors 1420 in etwa der Wölbung des Gehäuseabschlusses 32 folgt. Damit ist eine verbesserte Abschirmung der Motorteile gegen die Außenwelt zusätzlich zur Gehäusekappe 32 erreicht. Die in etwa V-förmige Tragkonstruktion 1440 für den Stator 1410 mit dem vorerwähnten zylindrischen Kragarmträger 32.2 ist nunmehr --im Unterschied zur ersten Variante der Fig. 2-- nicht an der Gehäusekappe 32, sondern an der Zwischenwandung 31 des Kurbelgehäuses 1101B angebracht. Dies hat den Vorteil, dass eine gegebenenfalls doch gewichtsträchtige Last des Stators 1410 an einem vergleichsweise stabilen Gehäuseteil befestigt ist. Außerdem lässt sich der Motor 40 über eine geöffnete Gehäusekappe 32 vergleichsweise einfach aufbauen, indem zunächst das erste Achslager 51 in die Gehäuseausstülpung 31.1 eingesetzt wird, danach die Kragarmträger 32.2 angebracht werden unter Anbringung des Stators 1410 und anschließend der Rotormantel 42 mit den Permanentmagneten 1421 unter Aufbringen des Rotorflansches 41 auf der Antriebswelle 10 angebracht wird. Abschließend wird das zweite Achslager 52 mit der Gehäusekappe 32 aufmontiert. Das Pleuellager 53 kann wiederum über die Gehäuse-Deckplatte 34 des Kurbelgehäuses 1101B angebracht werden. Grundsätzlich hat diese oder eine ähnliche Anordnungen Einfluss auf ein Drehschwingungsverhalten; insbesondere kann dazu eine Torsionsdämpfung zweckmäßig sein. Vorzugsweise ist eine Fest- und/oder Loslagerung vorgesehen, um bei wärmebedingtem Verzug möglichst wenig Lageänderung am Pleuellager hinnehmen zu müssen. Zwar ist eine Stützlagerung grundsätzlich möglich. Jedoch hat sich eine Drehmomentübertragung gemäß der Konstruktion in Fig. 3 --über eine vergleichsweise lange Welle-- und gemäß der Konstruktion der Fig. 2 -- über eine vergleichsweise kurze Welle-- als grundsätzlich vorteilhaft erwiesen. Bei einer kurzen Welle können vorteilhaft in einer Abwandlung der Flansch der Rotorglocke und die Kurbelwelle als ein Bauteil ausgeführt werden.

Fig. 4 zeigt schematisch das Antriebsgehäuse 30 mit dem vorgenannten Kurbelgehäuse 1101B und Motorgehäuse 1102, den Kurbeltrieb 1300 mit Antriebswelle 10 und Hubzapfen 20 wie bereits anhand von Fig. 2 und Fig. 3 beschrieben. Die Lageranordnung 50 ist hinsichtlich des Pleuellagers 53 und des ersten Achslagers 51 wie in Fig. 2 und Fig. 3 ausgeführt. Das zweite Achslager 52 ist vorliegend innerhalb der Rotormantel 42 des Rotors 1420 auf der Antriebswelle 10 angeordnet und darüber hinaus im Stator 1410, nämlich im Blechpaket des Ankers 1412 für die Wicklung 1411 integriert. Das Motorgehäuse 1102 ist mit einer Gehäusekappe 32 abgeschlossen, wie im vorliegenden Fall vereinfacht ohne die Ausstülpung 32.1 ausgeführt werden kann, da das zweite Achslager 52 im Stator 1410 gehalten ist.

Fig. 5 zeigt eine weitere Abwandlung zur Sache, wobei der Kurbeltrieb 1300 wiederum wie vorbeschrieben ausgeführt ist im Antriebsgehäuse 30. Im vorliegenden Fall des Motors 40 zur Bildung des Antriebs 1400 ist der Stator 1410 im Wesentlichen wie in Fig. 2 beschrieben ausgeführt, wobei der Rotor 1420 wie in Fig. 2 beschrieben ausgerichtet ist. Im vorliegenden Fall trägt der Hubflansch 21 des Hubzapfens 20 sowohl das erste Achslager 51 als auch die Tragglocke 41.1 des Rotors zur Bildung des Rotormantels 42. Der Rotormantel 42 weist an seinem dem zweiten Ende 12 der Antriebswelle 10 zugewandten Ende einen Absatz-Abschnitt 42.1 --hier ein Ringabschnitt-- auf, welcher am zweiten Achslager 52 gelagert ist. Das zweite Achslager 52 wiederum ist an einer zylindrischen Ausstülpung 32.1 der Gehäusekappe 32 des Motorgehäuses 1102 festgelegt. Das erste Achslager 51 ist im Bauraum des Stators 1410 (analog zum zweiten Achslager gemäß Abwandlung der Fig. 4) untergebracht. Der über den Rotorflansch 41 an der Antriebswelle 10 gehaltene Rotor 1420 mit Rotormantel 42 ist somit außerdem auf der dem Tragglocke 41.1 gegenüberliegenden Ende mittels dem Absatz-Abschnitt 42.1 am zweiten Achslager 52 gelagert.

Der starre Lagerzapfen 14 wiederum ist bei der in Fig. 5 gezeigten Abwandlung der Ausführungsform der Fig. 2 vorliegend hohl ausgebildet und in der Lage, in dem Hohlraum, eine Kabelführung aufzunehmen. Dies ist optional. Insgesamt zeigt sich, dass die Antriebswelle 10 gemäß Abwandlung der Fig. 5 mit vergleichsweise wenig Torsionsbelastung gehalten werden kann. Die Lagerung erfolgt über den Rotormantel 42 am Absatz-Abschnitt 42.1 --hier ein Ringabschnitt-- bzw. am Rotorflansch 41 unter Einbezug des Hubzapfens 20 erfolgt. Dagegen kann der Rotormantel 42 --etwa durch Gestaltung des Absatz-Abschnittes 42.1 und/oder des Kragarms 41.1-- mit einer geeignet gestalteten Gewichtsverteilung derart ausgeführt werden, dass im vorliegenden Fall der Abwandlung ein Ausgleichsgewicht 23 (wie in den Ausführungsformen der Fig. 2 bis Fig. 4) am Hubzapfen 20 entbehrlich wird. Mit anderen Worten ist ein Ausgleichsgewicht vorliegend durch eine geeignete Gewichtsverteilung am Rotormantel 42 realisiert. Beispielsweise kann der Absatz-Abschnitt 42.1 und/oder besonders vorteilhaft an dem näher am Hubzapfen 20 gelegenen Kragarm 41.1 auf unterschiedlichen Seiten der Motorachse MA mit unterschiedlichem Gewicht versehen werden, etwa durch Aufdickung oder Anbringen von Bohrungen oder dergleichen materialverändernden Maßnahmen. Eine solche Maßnahme am Kragarm 41.1 ist insbesondere einer Vermeidung einer Taumelbewegung des Rotormantels 42 zuträglich, da ein Ausgleichsgewicht dann vergleichsweise nah zum Unwuchtursprung, nämlich insbesondere den Pleueln 1302, positioniert ist. Darüber hinaus zeichnet sich die Abwandlung zur zweiten Variante der Ausführungsform der Fig. 3 durch einen besonders kurz gestalteten Bauraumbedarf in Richtung der Motorachse MA aus. Denn zum Einen ist das erste Achslager 51 im Stator 1410 integriert und auf dem Hubzapfen 20 realisiert ist unter Einbeziehung des Rotorzapfens 41 bzw. der Tragglocke 41.1. Zum Anderen ist das zweite Achslager 52 ebenfalls direkt am Rotor 1410, nämlich an einem Absatz-Abschnitt 42.1 des Rotormantels 42 realisiert. Damit realisiert die Abwandlung der Ausführungsform der Fig. 5 die bisher kürzeste Bauform unter Torsionsentlastung der Antriebswelle 10; insofern folgt die Abwandlung einem Prinzip zur Verringerung der Bauraumerfordernisse wohingegen die Ausführungsform der ersten und zweiten Variante gemäß Fig. 2 und Fig. 3 eher eine vergleichsweise stabile, d. h. über einen möglichst langen Abstand realisierte Lagerung der Antriebswelle 10 vorsieht; dies zu Lasten der Bauraumanforderungen. Wie die Abwandlung der Ausführungsform der Fig. 4 zeigt, kann durchaus ein Kompromiss zwischen den grundsätzlichen Prinzipien der Fig. 2, Fig. 3 einerseits und Fig. 5 andererseits vorgenommen werden unter Abwägung der Bauraumanforderungen und Stabilitäts- bzw. Torsionsanforderungen an eine Antriebswelle. Umso geringer die Torsionsanforderungen an die Welle 10 sind, desto leichter und mit geringerem Durchmesser kann die Antriebswelle 10 ausgelegt werden. So zeigt sich, dass die Ausführungsformen der Fig. 2 bis Fig. 5 durchaus mit Antriebswellen ausgeführt werden können, deren Durchmesser unterhalb von 15 mm liegt. Der Durchmesser kann im Hinblick auf eine Entlastung der Antriebswelle 10 durchaus noch verringert werden, beispielsweise bis auf einen Durchmesser unterhalb von 12 mm, insbesondere unterhalb von 10 mm, vorzugsweise bei der Abwandlung der Ausführungsform der Fig. 5.

Fig. 6 zeigt eine weitere in von der ersten Variante einer Ausführungsform der Fig. 2 ausgehende Abwandlung eines Antriebs 1400 in Kombination mit einem Kurbeltrieb 1300. Die Ausführung des Motors 40 ist wie in Fig. 6 schematisch gezeigt weitgehend gemäß der ersten Variante der Fig. 2 umgesetzt. Allerdings ist vorliegend die Antriebswelle 10 mit ihrem ersten antriebsseitigen Ende 11 und der Tragglocke 41.1 sowie dem Rotormantel 42 einstückig ausgeführt. Alternativ kann die Antriebswelle mit der Tragglocke 41.1 einstückig ausgeführt werden und die Rotormantel 42 mit Permanentmagneten angesetzt werden. In beiden Fällen können die Permanentmagnete (in Fig. 6 nicht näher dargestellt) separat an ein einstückiges zylindrisches Teil des Rotormantels 42 angesetzt werden. Das einstückige zylindrische Teil kann einstückig mit der Antriebswelle 10 und der Tragglocke 41.1 gebildet sein oder als separates Teil zur Verfügung gestellt und assembliert sein. Die Abwandlung der Fig. 6 zur ersten Variante der Fig. 2 optimiert darüber hinaus eine vergleichsweise nachhaltige Lagerung der Antriebswelle 10, die in einstückiger Ausführung mit dem Hubzapfen 20 außerdem durch ein am Hubzapfen drehbar festgelegtes Gegenlagerstück 70 gegengelagert ist. Das Gegenlagerstück 70 greift dazu mit einem Lagerzapfen 71 in den Hubstutzen 22 ein und weist außerdem ein Ausgleichsgewicht 73 auf. Das Gegenlagerstück 70 ist dann in dem Gegenachslager 54 gelagert, wobei das Gegenachslager 54 an einer der Gehäuse-Deckplatte 34 des Kurbelgehäuses 1101B gehalten ist; nämlich in einer Ausstülpung 34.1 der Gehäuse-Deckplatte 34 gehalten ist. Auch im vorliegenden Fall ist ein vergleichsweise kurzer Bauraum erreicht, in dem die Lagerung der Antriebswelle 10 mit erstem und zweitem Achslager 51, 52 auf dem gesamten Bauraum des Motorgehäuses 1102 und Kurbelgehäuses 1101B erstreckt ist, was gleichwohl zu einer sicheren Lagerung der Antriebswelle führt - außerdem aber kann das Antriebsgehäuse 30 praktisch als ein einziger Gehäuseraum umfassend das Kurbelgehäuse 1101B und das Motorgehäuse 1102 ausgeführt werden, wobei eine Trennwandung 31 zwischen den Gehäuseteilen nicht mehr wirklich vorgesehen ist.

Außerdem bietet die Abwandlung der Fig. 6 auch die Vorteile der mit Fig. 5 beschriebenen Möglichkeiten ein Ausgleichsgewicht am Rotor bzw. an der Rotormantel 42 zu realisieren - dies zeigt sich in dem geringer ausfallenden Ausgleichsgewicht 73 am Gegenlagerstück 70. Im vorliegenden Fall aber kann vor allem die Integration des Antriebs 40 mit Kurbeltrieb 1300 in einem einzigen Gehäuse 30 erfolgen ohne weiteren Einzug einer Trennwand. Besonders vorteilhaft ist bei der Abwandlung der Fig. 6 die einstückige Ausführung der Antriebswelle 10 mit Kurbelstutzen 20 und Rotormantel 42 zur Bildung des Triebbauteils zu nennen.

Um dieses Prinzip weiter konsequent fortzusetzen ist die von der ersten Variante der Fig. 2 der Ausführungsform ausgehende Abwandlung der Fig. 7 im Wesentlichen hinsichtlich Kurbeltriebs 1300 wie die Abwandlung der Fig. 6 ausgeführt unter Beibehaltung des Lagerstücks 70 in Anbindung an einen Kurbelstutzen 22 wie zuvor beschrieben. Im vorliegenden Fall der Abwandlung der Fig. 7 entfällt ein in einer Gehäusekappe 32 gehaltenes zweites Achslager 52 und damit die Notwendigkeit einer separat abnehmbaren Gehäuseabdeckung am Gehäuse 30, insbesondere motoraußenseitig, vorzusehen. Vielmehr ist das Gehäuse 30 nunmehr als Antriebsgehäuse unter Integration des Motorgehäuses 1102 und Kurbelgehäuses 1101B als Gesamtgehäuse für den Antrieb 1400 und Kurbeltrieb 1300 ausgeführt und es ist lediglich erforderlich dieses einseitig zu öffnen; dies ist hier mit der Gehäuse-Deckplatte 34 und der Ausstülpung 34.1 umgesetzt. In der Ausstülpung 34.1 der Gehäuse-Deckplatte 34 ist das vorerwähnte Gegenachslager 54 zur Lagerung des Lagerteils 70 gehalten. Die weitgehend verkürzt ausgeführte Antriebswelle 10 --insofern reduziert auf den nunmehr einstückig und zusammenfallenden Teil eines Hubstutzenflansches 21 bzw. Rotorflansches 41 am ersten Ende 11 der Antriebswelle 10-- ist in einem dem Pleuellager 53 unmittelbar nebengeordneten ersten Achslager 51 gehalten.

Zusammenfassend sehen die Ausführungsformen der Fig. 6 bis Fig. 8 das Ersetzen des ersten Achslagers 51 durch ein weiteres Gegenachslager 54 vor, das an der Gehäuse-Deckplatte 34 des Gehäuses 30, nämlich dem vormaligen Kurbelgehäuse 1101B gehalten ist, wobei das zweite Achslager 52 beibehalten ist. Die Abwandlungsvariante der Fig. 7 sieht die Ersetzung des zweiten Achslagers 52 durch das weitere Gegenachslager 54 vor, wobei das erste Achslager 51 beibehalten ist. Damit ergibt sich mittels der in Fig. 7 dargestellten Abwandlungsvariante, die wohl kompakteste Bauweise eines Antriebs 1400 mit Kurbeltrieb 1300 unter Integration des vormaligen Kurbelgehäuses 1101B und Motorgehäuses 1102 in einem einzigen Antriebsgehäuse 30 mit Gehäuse-Deckplatte 34.

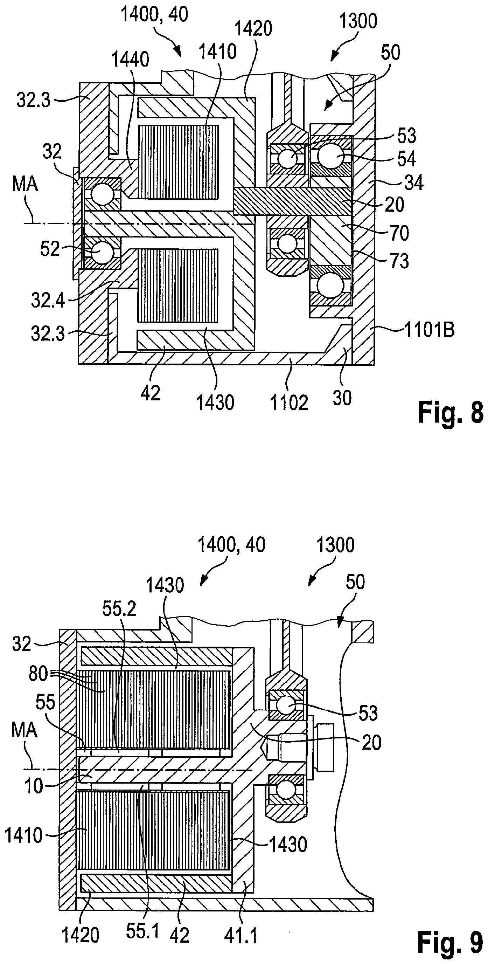

Bezugnehmend auf Fig. 8 sieht diese im Wesentlichen analoge Maßnahmen wie die Ausführungsform der Fig. 6 vor, weshalb zur weiteren Beschreibung derselben insbesondere auf die Beschreibung der Fig. 6 Bezug genommen wird. Insbesondere betrifft dies die Ausführung der Lageranordnung 50 mit zweitem Achslager 52, Pleuellager 53 und weiterem Gegenachslager 54. Allerdings ist das Ausgleichsgewicht 73 diesmal am Gegenlagerstück 70 innerhalb des weiteren Lagers 54 ausgeführt; das Gegenlagerstück insofern exzentrisch ausgeführt. Das zweite Achslager 52 ist nunmehr zwar anliegend an der Gehäusekappe 32 angeordnet, wobei die Gehäusekappe 32 quer zur Motorachse verkürzt ausgeführt ist. Letzteres ist umgesetzt zugunsten einer veränderten Statorhalterung 1440 für den Stator 1410, die nunmehr von einem außenradialen Umfang quer zur Motorachse MA bis zum radialen Umfang des zweiten Achslagers sich entlang einer Radiuserstreckung erstreckt und dann entlang der Motorachse zum Stator 1410 durchgreift um ein Joch desselben mit der Ankerwicklung zu halten. Die Statorhaltung weist insofern einen ersten Schenkel 32.3 und einen zweiten Schenkel 32.4 auf, der im Wesentlichen die Funktion des in Fig. 2 mit 32.2 bezeichneten Kragarms übernimmt. Der erste Schenkel 32.3 ist diesmal an einem zylindrischen Teil des Motorgehäuses 1102 festgemacht. Hinsichtlich der Bauraumersparnis kommt die Abwandlung der Fig. 8 auf ähnlich gute Werte wie die Abwandlung der Fig. 7, da ein zusätzlicher Platzbedarf für das zweite Achslager 52 im Vergleich zur Abwandlung der Fig. 6 eingespart wird. Wie aus Fig. 8 ersichtlich ist, ist nämlich das zweite Achslager 52 praktisch im Bauraum des Stators 1410 mit der Statorhalterung 1440 integriert und gleichwohl ist für den Motor 40 eine möglichst effektive Ausnutzung des Bauraums gegeben, da die Rotormantel 42 praktisch zur Statorhalterung 1440 sich entlang der Motorachse MA erstrecken kann. Die Integration gelingt wieder in einem gemeinsamen Gehäuse 30 gebildet aus einem Motorgehäuseteil 102 und einem Kurbelgehäuseteil 1101B.

Fig. 9 zeigt eine echte dritte Variante einer Ausführungsform eines Kurbeltriebs 1300 und eines Antriebs 1400 mit einem Motor 40, wobei die für gleiche oder ähnliche Teile oder Teile gleicher oder ähnlicher Funktion gleiche Bezugszeichen verwendet sind. Ähnlich wie in den Ausführungsformen der Fig. 6 bis Fig. 8 ist auch bei der hier dargestellten Ausführungsform die Antriebswelle 10 mit Hubzapfen 20 und Tragglocke 41.1 einstückig ausgeführt, gegebenenfalls auch mit der Rotormantel 42 einstückig ausgeführt. Die grundsätzliche Anordnung entspricht der Anordnung von Rotor und Stator ausgehend von der zweiten Variante der Fig. 2 ganz ähnlich wie bereits in Fig. 6 bis Fig. 8 erläutert. Im vorliegenden Fall der dritten Ausführungsform setzt sich die Lageranordnung 50 nunmehr zusammen aus dem Pleuellager 53 und --unter Wegfall des ersten und zweiten oder weiteren Achslagers-- einem Nadellager 55. Das Nadellager 55 ist ein Wälzlager niedriger Bauform. Die Welzkörper ähneln Nadeln in Form von vergleichsweise dünnen und sehr langen Zylinderrollen 55.1, 55.2. Das Nadellager 55 mit vorliegend zwei Welzkörpern 55.1, 55.2 entlang der Antriebswelle 10 ist in Fig. 9 lediglich symbolisch dargestellt und kann in unterschiedlichen Bauarten umgesetzt sein. Beispielsweise können zur Ausbildung von Nadelkränzen ein Welzkörperkäfig mit Welzkörpern ohne äußeres Gehäuse vorgesehen sein. Auch kann ein Nadellager mit Innenringen vorgesehen sein; dies erfordert nur eine einfach gezogene Welle. Schließlich kann auch ein Nadellager ohne Innenring umgesetzt sein; dies erfordert eine gehärtete Lauffläche auf der Antriebswelle 10. Alle vorgenannten Bauarten können einreihig, d. h. mit einer Reihe Welzkörpern als auch mehrreihig --wie vorliegend mit zwei Welzkörperreihen 55.1, 55.2-- ausgeführt werden.

Aufgrund des Entfalls des Bauraum beanspruchenden Bedarfs eines ersten, zweiten Achslagers 51, 52 oder weiteren Achslagern wie einem vorbenannten Gegenachslager 54 zeichnet sich auch die Abwandlung der Fig. 9 durch eine besonders kurze Bauform nicht nur entlang der Motorachse MA aus, sondern aufgrund der niedrigen Höhe des Nadellagers 55 auch in radialer Richtung als besonders Bauraum sparend. Fig. 9 zeigt auch --grundsätzlich anwendbar bei allen vorgenannten Ausführungsform der Fig. 2 bis Fig. 8-- einen Kabelbaum 80, der durch die Gehäusekappe 32 nach außen geführt ist.

Insgesamt ergeben sich aus den vorbeschriebenen Ausführungsformen folgende Vorteile:
- eine deutliche Reduzierung des Einbauraums
- eine Reduzierung der Bauteile
- eine Vereinfachung der Montage
- eine Kurbelwelle 1304 / Hubzapfen 20 wird integrierter Bestandteil des Rotors
- Entfall des separaten Ausgleichsgewichts durch Integration in den Rotor z. B. als Bohrung oder Absatz (Fig. 5, Fig. 6 und Fig. 8)
- Entfall einer von zwei Abdeckungen in der Motorraumachse, z. B.
   des Kurbelgehäusedeckels (vgl. Gehäusedeckplatte 34 in Fig. 6)
- Integration des gesamten Motors im Kurbelgehäuse möglich mittels dem Antriebsgehäuse 30
- Entfall einer separaten Kurbelwelle mit Ausgleichgewicht
- einfachere Montage und Auslegung der Motorlager (Achslager 51, 52, Gegenachslager 54) durch Entfall eines Pressverbunds
- Verbesserung der magnetischen Eigenschaften bei Varianten ohne durchgehende Motorwelle (Fig. 6- Fig.8)
- Nur noch Stützlagerung der Motorwelle (Antriebswelle 10) ohne Torsionsbelastung (z. B. bei Fig. 4)
- Einfache, preiswerte Lagerung durch Nadelhülse anstatt 2er Kugel- oder Wälzlager möglich (Fig. 9)
- Einfache Auswuchtung der Rotorglocke 1422 z. B. durch Bohrungen
- Gewichtseinsparung durch verkleinerte Bauform des Gesamtaggregates
- Energieeinsparung durch besseren Wirkungsgrad
- Erhöhung der Lebensdauer des Motors/Motorlagerungen durch Entfall des Bürstenabriebs
- Verringerung der Gleichlaufschwankungen durch erhöhtes Rotationsträgheitsmoment eines Außenläufer-Rotors; dadurch verringerte Anfälligkeit gegen Taumelbetrieb mit hohen Stromamplituden
- Verbesserte Laufruhe; vorzugsweise durch Verwendung eines Außenläufers
- Außenläufer mit hohem Rotationsträgheitsmoment und besserem Gleichlauf (Körperschall) bei verringerter Masse, aber optimaler Masseverteilung
- größerer Durchmesser des rotierenden Motorteiles (Energiespeicher)
- Hohes Trägheitsmoment kompensiert die Gleichlaufschwankungen infolge des
   geringeren Gesamtgewichtes und verringert den Körperschall
- Wicklung des Stators 1410 kommt generell ohne Verguss aus
- Gewickelter Anker 1412 steht und muss nicht mehr ausgewuchtet werden.
- Kein Bürstenverschleiß und damit auch
   - Keine Verschmutzung mehr insbesondere der Filter und des Granulates (Adsorbens) zur Lufttrocknung
   - Gute Kühlung und Durchlüftung einfacher und verschmutzungsfrei
   - Rotorglocke kann gleichzeitig als Lüfter zur Kühlung der Wicklung ausgelegt werden
- Verlängerung der Lebensdauer
- Anwendung in Hybrid- oder E-Fahrzeugen aus akustischen Gründen vorteilhaft; dazu bereits geeignete EMV-Maßnahmen
- insgesamt kürzere Bauformen für steifere Auslegungen der Antriebswelle möglich

### Bezugszeichenliste

- 0.1: Filter
- 0: Luftzuführung
- 1: Druckluftzuführung
- 2: Druckluftanschluss
- 3: Entlüftung
- 3.1: Entlüftungsdämpfer etc.
- 10: Antriebswelle
- 11: verjüngter Zapfen, erstes Ende
- 12: zweites Ende, verjüngter Teil der Antriebswelle
- 13: verdickter Teil der Antriebswelle
- 14: starrer Lagerzapfen
- 20: Hubzapfen
- 21: Hubflansch des Hubzapfens
- 22: Hubstutzen
- 23: Ausgleichsgewicht
- 28: Unterlegscheibe
- 29: Schraube
- 30: Verdichtergehäuse, Antriebsgehäuse
- 31: Gehäusewand, Zwischenwandung, Trennwandung
- 31.1, 32.1: zylindrische Ausstülpungen als Lagersitz
- 32: Gehäuseaußenwand, Motorgehäusewand, Abschlusskappe, Gehäuseabschluss
- 32.2: Kragarmträgerhaltung, Kragarm
- 32.3: erste Schenkel
- 32.4: zweite Schenkel
- 33: ringzylindrisches Gehäuseteil
- 34: Deckplatte, Abdeckplatte
- 34.1: Ausstülpung der Deckplatte
- 40: Motor
- 41: Rotorflansch, Rotorzapfen
- 41.1: Kragarm, Kragarm-Abschnitt, Tragglocke
- 42: Rotormantel
- 42.1: Absatz-Abschnitt
- 50: Lageranordnung
- 51, 52, 53, 54: Achslager
- 53: Pleuellager
- 55: Nadellager
- 55.1, 55.2: Zylinderrollen, Welzkörper
- 60: Dichtungsanordnung
- 61, 62, 63: Dichtungen
- 70: Gegenlagerstück
- 71: Lagerzapfen
- 73: Ausgleichsgewicht
- 80: Kabelbaum
- 100, 100A, 100B, 100C, 100D, 100E, 100F: Bordnetz
- 102: Motorgehäuseteil
- 210: Pneumatikhauptleitung
- 211: Lufttrockner
- 212: Drossel
- 220: Entlüftungsleitung
- 230: Zuführleitung
- 240: pneumatische Leitung
- 250: Galerie
- 251, 252, 253, 254, 255: Zweigleitungen
- 300: Steuerstromleitungen
- 301, 302, 303, 304, 305: 2/2-Wegeventil
- 301,401: Signalleitungen
- 310: Entlüftungsventil-Steuerstromleitung
- 311, 312, 313, 314: Luftfeder
- 315: Druckluftreservoir
- 320: Ventilanordnung
- 321: Steuerventil
- 322: Entlüftungsventil
- 330: Verdichter
- 331: Kompressor
- 332: Elektromotor
- 400: Sensorleitungen
- 401, 402, 403, 404: Sensoren, Signalleitungen
- 405, 406: Spannungsdrucksensor
- 410: Fahrzeugsteuerung
- 420: Fahrzeugbus
- 500: Versorgungsstromleitung
- 510: Relais-Steuerleitung
- 520: Relais
- 1000: Druckluftversorgungsanlage
- 1001: Pneumatikanlage
- 1002: Druckluftversorgungssystem
- 1100: Gehäuseanordnung
- 1101: Gehäuse
- 1101A: Kolbengehäuse
- 1101B: Kurbelgehäuse
- 1102: Motorgehäuse
- 1103: Trockner- und Ventilgehäuse
- 1103A: Trocknergehäuse
- 1103B: Schaltgehäuse
- 1300: Kurbeltrieb
- 1301: Kolben
- 1302: . Pleuel, Pleuelstange
- 1303: Exzenterlager, Lageröffnung
- 1304: Exzenterwelle, Kurbelwelle
- 1305: Achswelle, Achswelle
- 1400: Antrieb des Kurbeltriebs
- 1410: Stator
- 1411: Statorwicklung
- 1412: Joch, Anker mit Isolations-Stern
- 1420: Rotor
- 1421: Permanentmagnete
- 1422: Rotorglocke
- 1430: Luftspalt oder Wickelisolation
- 1440: Tragkonstruktion, Halterung
- 1450: Luftspalt oder Wickelisolation
- 1500: Lageranordnung
- 1501: A-Lager, Wälzlager
- 1502: B-Lager, Wälzlager
- EA: Exzenterachse
- MA: Motorachse

## Patentansprüche

1. Verdichteranordnung zum Betreiben einer Druckluftversorgungsanlage eines Fahrzeugs, aufweisend einen Verdichter (330) mit:
- einem Elektromotor (332), der als ein elektronisch kommutierter, bürstenloser GleichstromMotor mit einer Ansteuerschaltung umfassend eine Leistungselektronik (BL-DC Motor) gebildet ist,
- einem pneumatischen Kompressor (331),
**dadurch gekennzeichnet, dass**
- der Elektromotor (332) in Form eines Außenläufer-Motors gebildet ist.

2. Verdichteranordnung nach Anspruch 1 **dadurch gekennzeichnet, dass** der Kompressor als ein Einzylinder-, Zweizylinder- oder Mehrzylinder-Kompressor gebildet ist.

3. Verdichteranordnung nach Anspruch 1 oder 2, **dadurch gekennzeichnet, dass**
- der Elektromotor einen Stator, einen Rotor und eine mit dem Rotor gekoppelte Antriebswelle aufweist, wobei der Stator getrennt durch einen Luftspalt im Rotor gehalten und vom Rotor rotierbar umgeben ist,
insbesondere der Rotor mit einer Rotorglocke gebildet ist, insbesondere ausgebildet ist, ein Ausgleichsgewicht darzustellen, und
- der Rotor eine Anzahl von Permanentmagneten trägt, und
- der Stator einen Anker, insbesondere ein Blechpaket, mit einer Ankerwicklung trägt, die an eine elektronische Ansteuerschaltung angeschlossen ist, wobei
- der Kompressor wenigstens ein Pleuel und wenigstens einen Kolben aufweist, die über eine Kurbelwelle antreibbar ist, wobei die Kurbelwelle an die Antriebswelle gekoppelt ist und wobei
- der Elektromotor mit der elektronischen Ansteuerschaltung steuerverbunden ist, insbesondere die intern eines Gehäuses der Verdichteranordnung angeordnet ist, die ausgebildet ist,
den bürstenlosen Motor elektronisch zu kommutieren, insbesondere an einen elektronischen Kommutator angeschlossen ist, und in der Leistungselektronik wenigstens ein elektronisches Relais und/oder einen Gleichspannungswandler hat, und die Leistungselektronik als Eingang eine Gleichspannungs-Quelle und als Ausgang eine Wechselspannungs-Quelle hat.

4. Verdichteranordnung nach Anspruch 3 **dadurch gekennzeichnet, dass** an die Antriebswelle motorabtriebsseitig ein exzentrisch zur Motorachse (MA) gebildeter Hubzapfen anschließt, der die Kurbelwelle bildet.

5. Verdichteranordnung nach einem der Ansprüche 3 oder 4, **dadurch gekennzeichnet, dass** die elektronische Ansteuerschaltung weiter aufweist:
- ein erstes Regelmodul, das ausgebildet ist, ein Maß für einen Energiespeicherumfang einer Rotationsenergie des Rotors vorzuhalten, insbesondere eine Drehwinkelgeschwindigkeit des Rotors zu überwachen und/oder zu steuern oder zu regeln.

6. Verdichteranordnung nach einem der Ansprüche 3 bis 5, **dadurch gekennzeichnet, dass** die elektronische Ansteuerschaltung weiter aufweist:
- ein zweites Regelmodul, das ausgebildet ist, eine Drehzahl des Rotors zu überwachen, insbesondere eine Drehzahl des Rotors zu steuern oder zu regeln, insbesondere der Elektromotor an einen Drehzahlregler angeschlossen ist, der ausgebildet ist, die Betriebsspannung am Motor und/oder die Drehfeldfrequenz regelbar einzustellen, vorzugsweise konstant zu halten oder zu erhöhen.

7. Verdichteranordnung nach einem der Ansprüche 3 bis 6, **dadurch gekennzeichnet, dass** der Elektromotor ausgebildet ist, in einem Druckregelbetrieb betrieben zu werden, wobei die elektronische Ansteuerschaltung weiter aufweist:
ein drittes Regelmodul, das ausgebildet ist, den Elektromotor in einem Druckregelbetrieb zu betreiben, insbesondere an eine Druckregelschnittstelle des Kompressors angeschlossen ist.

8. Verdichteranordnung nach einem der Ansprüche 3 bis 7, **dadurch gekennzeichnet, dass die** elektronische Ansteuerschaltung weiter aufweist:
- ein viertes Regelmodul, das zur Umsetzung einer Sanftanlauf- und/oder Auslauf-Regelung ausgebildet ist, einen Anlaufstrom und/oder einen Auslaufstrom des Elektromotors zu begrenzen (CSS), insbesondere die Betriebsspannung am Motor regelbar einzustellen, vorzugsweise konstant zu halten oder zu erniedrigen.

9. Verdichteranordnung nach einem der Ansprüche 3 bis 8 **dadurch gekennzeichnet, dass** zur Einstellung einer Betriebsspannung die elektronische Ansteuerschaltung ausgebildet ist, eine Betriebsspannung, vorzugsweise in Form einer Wechselspannungsquelle, an eine Bordnetzspannung anzupassen --vorzugsweise alternativ oder wahlweise alternativ oder kombinierbar oder gleichzeitig-- in einem oder mehreren der Spannungsbereiche, vorzugsweise einer Gleichspannung, ausgewählt aus der Gruppe von Bereichen, umfassend:
- eine Spannung zwischen 8 V und 50 V;
- eine Spannung zwischen 10V und 15V, vorzugsweise bei 12V,
- eine Spannung zwischen 14 V und 37 V,
- eine Spannung zwischen 42V und 49V, vorzugsweise bei 48V,
- eine Spannung zwischen 200- 650V.

10. Verdichteranordnung nach einem der Ansprüche 1 bis 9, **dadurch gekennzeichnet, dass** der Kompressor über einen vom Elektromotor und einem Kurbeltrieb gebildeten Antrieb antreibbar ist, wobei der Antrieb in einem den Kurbeltrieb und den Elektromotor umschließenden integrierten Antriebsgehäuse (30) untergebracht ist und an ein Kolbengehäuse (1101A) anschließt, wobei
das integrierte Antriebsgehäuse ein Motorgehäuse (1102) und ein Kurbelgehäuse (1101B) kombiniert, insbesondere frei von einer Trennwand zwischen Motorgehäuse (1102) und ein Kurbelgehäuse (1101B) ist.

11. Verdichteranordnung nach einem der Ansprüche 3 bis 10, **dadurch gekennzeichnet, dass** ein Hubzapfen einstückig oder mittels Presssitz oder dergleichen Reib- und/oder Formschluss-Verbindung an die Antriebswelle angesetzt ist.

12. Verdichteranordnung nach einem der Ansprüche 3 bis 11 **dadurch gekennzeichnet, dass**
eine Rotorglocke wenigstens in einem Anschlussteil einstückig oder mittels Presssitz oder dergleichen Reib- und/oder Formschluss-Verbindung
- an die Antriebswelle angesetzt ist und/oder
- an einen Hubzapfen angesetzt ist.

13. Verdichteranordnung nach einem der Ansprüche 3 bis 12 **dadurch gekennzeichnet, dass**
- die Antriebswelle, ein Hubzapfen und wenigstens ein Anschlussteil ein einstückiges oder mittels Presssitz oder dergleichen Reib- und/oder Formschluss-Verbindung gebildetes Kurbeltriebbauteil bilden, wobei
- das Kurbeltriebbauteil von einer Lageranordnung, umfassend ein Pleuellager und wenigstens ein Achslager, insbesondere ein Pleuellager und ein erstes und ein zweites Achslager, gelagert ist.

14. Verdichteranordnung nach einem der Ansprüche 3 bis 13 **dadurch gekennzeichnet, dass** die Antriebswelle, ein Hubzapfen und wenigstens das Anschlussteil ein einstückiges oder mittels Presssitz oder dergleichen Reib- und/oder Formschluss-Verbindung gebildetes Kurbeltriebbauteilbilden, wobei
- das Kurbeltriebbauteil in Kombination mit einem Gegenlagerstück von einer Lageranordnung umfassend ein Pleuellager, ein Achslager und ein Gegenachslager, insbesondere ein Pleuellager und genau ein erstes oder ein zweites Achslager und das Gegenachslager, gelagert ist.

15. Verdichteranordnung nach einem der Ansprüche 1 bis 14 **dadurch gekennzeichnet, dass**
- eine Lageranordnung ein Pleuellager, ein erstes Achslager (A-Lager) und ein zweites Achslager (B-Lager) umfasst, insbesondere ein erstes Achslager (A-Lager) und/oder ein zweites Achslager (B-Lager) mittels wenigstens einem Wälzlager oder einem Nadellager, insbesondere mit wenigstens einer Lagerhülse, gebildet ist; oder
- eine Lageranordnung ein Pleuellager und ein erstes Achslager (A-Lager) oder ein zweites Achslager (B-Lager) und ein Gegenachslager umfasst.

16. Verdichteranordnung nach einem der Ansprüche 14 oder 15 **dadurch gekennzeichnet, dass** motorabtriebsseitig und exzentrisch zur Motorachse das Kurbeltriebbauteil oder das Gegenlagerstück ein Ausgleichsgewicht aufweist, insbesondere
- das Ausgleichsgewicht zwischen einem Pleuellager und einem ersten Achslager (A-Lager) an dem Kurbeltriebbauteil gebildet ist, insbesondere einstückig als Teil eines Hubzapfens; oder
- das Ausgleichsgewicht zwischen dem Pleuellager und dem Gegenachslager an dem Gegenlagerstück gebildet ist, insbesondere einstückig als Teil des Gegenlagerstücks.

17. Verdichteranordnung nach einem der Ansprüche 1 bis 16 **dadurch gekennzeichnet, dass** eine Antriebswelle in einem ersten Achslager (A) gelagert ist, das einem Pleuellager unmittelbar benachbart angeordnet ist, insbesondere nur in dem ersten Achslager gelagert ist, wobei das erste Achslager (A) innerhalb oder außerhalb einer Rotorglocke angeordnet ist.

18. Verdichteranordnung nach einem der Ansprüche 1 bis 17 **dadurch gekennzeichnet, dass** ein Rotor und/oder eine Antriebswelle in einem zweiten Achslager (B) gelagert ist, das wenigstens teilweise durch die Antriebswelle beabstandet von einem Pleuellager angeordnet ist, insbesondere nur in dem zweiten Achslager gelagert ist, wobei das zweite Achslager (A) innerhalb oder außerhalb der Rotorglocke angeordnet ist.

19. Verdichteranordnung nach einem der Ansprüche 1 bis 18 **dadurch gekennzeichnet, dass**
- ein erstes Achslager (A-Lager) als ein motorabtriebsseitiges Achslager an einer Zwischenwandung (31) des Antriebsgehäuses festgelegt ist; und/oder
- ein zweites Achslager (B-Lager) als ein einem motorabtriebsseitigen Achslager gegenüberliegendes Achslager an einer dem Elektromotor zugeordneten Gehäuseaußenwand des Antriebsgehäuses (30) festgelegt ist, insbesondere an einer Ausstülpung (32.1) derselben, vorzugsweise an einer Gehäusekappe (32) festgelegt ist, insbesondere neben einem Elektromotorgehäuseabschluss festgelegt ist; und/oder
- ein Gegenachslager als ein motorabtriebsseitiges Achslager an einer weiteren dem Kurbeltrieb zugeordneten Gehäuseaußenwand des Antriebsgehäuses (30) festgelegt ist, insbesondere an einer Ausstülpung (34.1) derselben, vorzugsweise an einer Gehäusedeckplatte (34) festgelegt ist, insbesondere neben einem Kompressorgehäuseabschluss festgelegt ist.

20. Verdichteranordnung nach einem der Ansprüche 1 bis 19 **dadurch gekennzeichnet, dass** ein Stator und/oder ein Rotor über einen Kragträger gehalten sind, der einen gewölbten Kragarm-Abschnitt, insbesondere mit in etwa V-förmigem Querschnitt, aufweist.

21. Verdichteranordnung nach Anspruch 20 **dadurch gekennzeichnet, dass** der Kragarm-Abschnitt quer zur Antriebswelle verläuft und
- ein erster Kragarm-Abschnitt für den Stator an einem Antriebsgehäuse ansetzt, und/oder
- ein zweiter Kragarm-Abschnitt für den Rotor an der Antriebswelle und/oder dem Hubzapfen ansetzt,
- insbesondere der erste und/oder zweite Kragarm-Abschnitt einstückig oder mittels Presssitz oder dergleichen Reib- und/oder Formschluss-Verbindung gehalten ist.

22. Druckluftversorgungsanlage mit einer Verdichteranordnung nach einem der Ansprüche 1 bis 21, insbesondere zum Betreiben einer Pneumatikanlage (1001) eines Fahrzeugs, insbesondere einer Luftfederanlage und/oder einer Bremse und/oder einer Aufbereitungseinrichtung für Druckluft, aufweisend:
- eine Druckluftzuführung (1), einen Druckluftanschluss (2) zur Pneumatikanlage (1001) und einen Entlüftungsanschluss (3) zur Umgebung;
- zwischen der Druckluftzuführung (1) und dem Druckluftanschluss (2) eine Pneumatikhauptleitung (210), die einen Lufttrockner (211), insbesondere ein entsperrbares Rückschlagventil einer Ventilanordnung, aufweist;
- zwischen dem Druckluftanschluss (2) und dem Entlüftungsanschluss (3) eine Entlüftungsleitung (220) mit einem Entlüftungsventil (322), insbesondere in Verbindung mit einem Steuerventil (321) einer Ventilanordnung (320), wobei
- die Druckluftzuführung (1) mit von der Verdichteranordnung erzeugbarer Druckluft beaufschlagbar ist.

23. Druckluftversorgungssystem (1002) mit einer Pneumatikanlage (1001), insbesondere mit einer Druckluftversorgungsanlage (1000) gemäß Anspruch 22 mit einer Pneumatikhauptleitung (210), insbesondere zum Betreiben einer Luftfederanlage eines Fahrzeugs, vorzugsweise eines PKWs, SUVs, LKWs oder dergleichen Nutzfahrzeug, wobei
- zum Betreiben der Pneumatikanlage (1001) mit einer Druckluftströmung und/oder zur Aufbereitung von Druckluft,
- eine an einen Verdichter (330) der Verdichteranordnung nach einem der Ansprüche 1 bis 20 angeschlossene Druckluftzuführung (1) und ein Druckluftanschluss (2) zu der Pneumatikanlage (1001) pneumatisch verbunden ist.

24. Fahrzeug, insbesondere PKW, mit einer Pneumatikanlage (1001), insbesondere einer Luftfederanlage, und einer Druckluftversorgungsanlage (1000) gemäß Anspruch 22 zum Betreiben der Pneumatikanlage (1001) mit einer Druckluftströmung (DL).

25. Verfahren zum Betreiben einer Druckluftversorgungsanlage eines Fahrzeugs mit einer Verdichteranordnung, aufweisend einen Verdichter (330) mit:
- einem Elektromotor (332), der als ein elektronisch kommutierter, bürstenloser GleichstromMotor mit einer Ansteuerschaltung umfassend eine Leistungselektronik (BL-DC Motor) gebildet ist,
- einem pneumatischen Kompressor (331),
**dadurch gekennzeichnet, dass**
- der Elektromotor (332) in Form eines Außenläufer-Motors gebildet ist, insbesondere das Verfahren die Schritte aufweist:
- vorhalten eines Maßes den Energiespeicherumfang einer Rotationsenergie des Rotors.

## Claims

1. Compressor arrangement for operating a compressed air supply facility of a vehicle, having a compressor (330) having:
- an electric motor (332), which is constructed as an electronically commutated, brushless DC motor with a control circuit comprising a power electronics unit (BL-DC motor),
- a pneumatic compressor element (331),
**characterized in that**
- the electric motor (332) is constructed in the form of an external rotor motor.

2. Compressor arrangement according to Claim 1, **characterized in that** the compressor element is constructed as a single-cylinder, two-cylinder or multi-cylinder compressor element.

3. Compressor arrangement according to Claim 1 or 2, **characterized in that**
- the electric motor has a stator, a rotor and a drive shaft coupled to the rotor, wherein the stator is held in the rotor in a manner separated by an air gap and is surrounded rotatably by the rotor,
in particular, the rotor is constructed with a rotor bell, in particular is designed to form a balance weight, and
- the rotor carries a number of permanent magnets, and
- the stator carries an armature, in particular a laminated core, having an armature winding, which is connected to an electronic control circuit, wherein
- the compressor element has at least one connecting rod and at least one piston, which can be driven via a crankshaft, wherein the crankshaft is coupled to the drive shaft, and wherein
- the electric motor is connected for control to the electronic control circuit, the latter being arranged, in particular, inside a housing of the compressor arrangement, which
is designed
to electronically commutate the brushless motor, in particular being connected to an electronic commutator, and has at least one electronic relay and/or a DC-DC converter in the power electronics unit, and the power electronics unit has a DC voltage source as an input and an AC voltage source as an output.

4. Compressor arrangement according to Claim 3, **characterized in that** a crankpin formed eccentrically with respect to the motor axis (MA), which forms the crankshaft, adjoins the drive shaft on the motor output side.

5. Compressor arrangement according to either of Claims 3 and 4, **characterized in that** the electronic control circuit furthermore has:
- a first control module, which is designed to store a measure of an energy storage capacity for a rotational energy of the rotor, being designed, in particular, to monitor and or perform open-loop or closed-loop control of an angular speed of the rotor.

6. Compressor arrangement according to one of Claims 3 to 5, **characterized in that** the electronic control circuit furthermore has:
- a second control module, which is designed to monitor a speed of the rotor, in particular to perform open-loop or closed-loop control of a speed of the rotor, in particular the electric motor being connected to a speed controller, which is designed to set the operating voltage at the motor and/or the rotary field frequency in an adjustable manner, preferably holding it constant or increasing it.

7. Compressor arrangement according to one of Claims 3 to 6, **characterized in that** the electric motor is designed to be operated in a pressure control mode, wherein the electronic control circuit furthermore has:
a third control module, which is designed to operate the electric motor in a pressure control mode, in particular being connected to a pressure control interface of the compressor element.

8. Compressor arrangement according to one of Claims 3 to 7, **characterized in that** the electronic control circuit furthermore has:
- a fourth control module, which is designed to implement a gentle startup and/or rundown control operation, to limit a startup current and/or a rundown current of the electric motor (CSS), in particular to set the operating voltage at the motor in an adjustable manner, preferably holding it constant or reducing it.

9. Compressor arrangement according to one of Claims 3 to 8, **characterized in that**, to set an operating voltage, the electric control circuit is designed to adapt an operating voltage, preferably in the form of an AC voltage source, to an onboard electrical system voltage -- preferably alternately or optionally alternately or with the possibility of combination or simultaneously -- in one or more of the voltage ranges, preferably a DC voltage, selected from the group of ranges comprising:
- a voltage between 8 V and 50 V;
- a voltage between 10 V and 15 V, preferably 12 V,
- a voltage between 14 V and 37 V,
- a voltage between 42 V and 49 V, preferably 48 V,
- a voltage between 200-650 V.

10. Compressor arrangement according to one of Claims 1 to 9, **characterized in that** the compressor element can be driven by means of a drive formed by the electric motor and a crank mechanism, wherein the drive is accommodated in an integrated drive housing (30) surrounding the crank mechanism and the electric motor and adjoins a piston housing (1101A), wherein the integrated drive housing combines a motor housing (1102) and a crankcase (1101B), in particular being free from a dividing wall between the motor housing (1102) and a crankcase (1101B).

11. Compressor arrangement according to one of Claims 3 to 10, **characterized in that** a crankpin is attached to the drive shaft integrally or by means of an interference fit or similar frictional and/or positive connection.

12. Compressor arrangement according to one of Claims 3 to 11, **characterized in that**,
at least in a connection part, a rotor bell is attached integrally or by means of an interference fit or a similar frictional and/or positive connection
- to the drive shaft and/or
- to a crankpin.

13. Compressor arrangement according to one of Claims 3 to 12, **characterized in that**
- the drive shaft, a crankpin and at least one connection part form a crank mechanism component which is integral or formed by means of an interference fit or a similar frictional and/or positive connection, wherein
- the crank mechanism component is supported by a bearing arrangement comprising a big end bearing and at least one axle bearing, in particular a big end bearing and a first and a second axle bearing.

14. Compressor arrangement according to one of Claims 3 to 13, **characterized in that** the drive shaft, a crankpin and at least the connection part form a crank mechanism component which is integral or formed by means of an interference fit or a similar frictional and/or positive connection, wherein
- the crank mechanism component in combination with a counter bearing piece is supported by a bearing arrangement comprising a big end bearing, an axle bearing and a counter axle bearing, in particular a big end bearing and precisely one first or one second axle bearing and the counter axle bearing.

15. Compressor arrangement according to one of Claims 1 to 14, **characterized in that**
- a bearing arrangement comprises a big end bearing, a first axle bearing (A bearing) and a second axle bearing (B bearing), in particular a first axle bearing (A bearing) and/or a second axle bearing (B bearing) being formed by means of at least one rolling bearing or one needle bearing, in particular having at least one bearing sleeve; or
- a bearing arrangement comprises a big end bearing and a first axle bearing (A bearing) or a second axle bearing (B bearing) and a counter axle bearing.

16. Compressor arrangement according to either of Claims 14 and 15, **characterized in that** the crank mechanism component or the counter bearing piece has a balance weight on the motor output side and eccentrically with respect to the motor axis, in particular
- the balance weight being formed between a big end bearing and a first axle bearing (A bearing) on the crank mechanism component, in particular integrally as part of a crankpin; or
- the balance weight being formed between the big end bearing and the counter axle bearing on the counter bearing piece, in particular integrally as part of the counter bearing piece.

17. Compressor arrangement according to one of Claims 1 to 16, **characterized in that** a drive shaft is supported in a first axle bearing (A), which is arranged directly adjacent to a big end bearing, in particular being supported only in the first axle bearing, wherein the first axle bearing (A) is arranged inside or outside a rotor bell.

18. Compressor arrangement according to one of Claims 1 to 17, **characterized in that** a rotor and/or a drive shaft is/are supported in a second axle bearing (B), which is arranged spaced apart from a big end bearing at least partially by the drive shaft, in particular being supported only in the second axle bearing, wherein the second axle bearing (A) is arranged inside or outside the rotor bell.

19. Compressor arrangement according to one of Claims 1 to 18, **characterized in that**
- a first axle bearing (A bearing) is fixed on an intermediate wall (31) of the drive housing as an axle bearing on the motor output side, and/or
- a second axle bearing (B bearing) is fixed, as an axle bearing situated opposite an axle bearing on the motor output side, on a housing outer wall, associated with the electric motor, of the drive housing (30), in particular being fixed on a protrusion (32.1) thereof, preferably being fixed on a housing cap (32), in particular being fixed adjacent to an electric motor housing closure; and/or
- a counter axle bearing is fixed, as an axle bearing situated on the motor output side, on another housing outer wall, associated with the crank mechanism, of the drive housing (30), in particular on a protrusion (34.1) thereof, preferably a housing cover plate (34), in particular adjacent to a compressor-element housing closure.

20. Compressor arrangement according to one of Claims 1 to 19, **characterized in that** a stator and/or a rotor are held by means of a cantilever, which has a curved cantilever arm section, in particular having an approximately V-shaped cross section.

21. Compressor arrangement according to Claim 20, **characterized in that** the cantilever arm section extends transversely to the drive shaft, and
- a first cantilever arm section for the stator starts at a drive housing, and/or
- a second cantilever arm section for the rotor starts at the drive shaft and/or the crankpin,
- in particular the first and/or second cantilever arm section being held integrally or by means of an interference fit or a similar frictional and/or positive connection.

22. A compressed air supply facility having a compressor arrangement according to one of Claims 1 to 21, in particular for operating a pneumatic facility (1001) of a vehicle, in particular an air spring facility and/or a brake and/or a conditioning device for compressed air, having:
- a compressed air feed (1), a compressed air port (2) leading to the pneumatic facility (1001) and a vent port (3) leading to the surroundings;
- a pneumatic main line (210), which has an air dryer (211), in particular a pilot controlled check valve of a valve arrangement, between the compressed air feed (1) and the compressed air port (2);
- a vent line (220) having a vent valve (322), in particular in combination with a control valve (321) of a valve arrangement (320), between the compressed air port (2) and the vent port (3), wherein
- the compressed air feed (1) can be supplied with compressed air that can be produced by the compressor arrangement.

23. The compressed air supply system (1002) having a pneumatic facility (1001), in particular having a compressed air supply facility (1000) according to Claim 22 having a pneumatic main line (210), in particular for operating an air spring facility of a vehicle, preferably a motor car, SUV, truck or similar commercial vehicle, wherein
- to operate the pneumatic facility (1001) with a compressed air flow and/or to condition compressed air,
- a compressed air feed (1) connected to a compressor (330) of the compressor arrangement according to one of Claims 1 to 20 and a compressed air port (2) leading to the pneumatic facility (1001) is pneumatically connected.

24. Vehicle, in particular a motor car, having a pneumatic facility (1001), in particular an air spring facility, and a compressed air supply facility (1000) according to Claim 22 for operating the pneumatic facility (1001) with a compressed air flow (DL).

25. Method for operating a compressed air supply facility of a vehicle having a compressor arrangement, having a compressor (330) having:
- an electric motor (332), which is constructed as an electronically commutated, brushless DC motor with a control circuit comprising a power electronics unit (BL-DC motor),
- a pneumatic compressor element (331),
**characterized in that**
- the electric motor (332) is constructed in the form of an external rotor motor, in particular the method having the following steps:
- storing a measure of the energy storage capacity for a rotational energy of the rotor.

## Revendications

1. Agencement de compresseur destiné à faire fonctionner un équipement d'alimentation en air comprimé d'un véhicule, possédant un compresseur (330) comprenant :
- un moteur électrique (332) qui est réalisé sous la forme d'un moteur à courant continu sans balai à commutation électronique avec un circuit d'excitation comportant une électronique de puissance (moteur BLDC),
- un compresseur pneumatique (331),
**caractérisé en ce que**
- le moteur électrique (332) est réalisé sous la forme d'un moteur à rotor externe.

2. Agencement de compresseur selon la revendication 1, **caractérisé en ce que** le compresseur est réalisé sous la forme d'un compresseur monocylindre, bicylindre ou à plusieurs cylindres.

3. Agencement de compresseur selon la revendication 1 ou 2, **caractérisé en ce que**
- le moteur électrique possède un stator, un rotor et un arbre d'entraînement couplé au rotor, le stator étant maintenu séparé dans le rotor par un entrefer et étant entouré de manière rotative par le rotor,
le rotor étant notamment formé avec une cloche de rotor, notamment étant configuré pour constituer un contrepoids, et
- le rotor porte un certain nombre d'aimants permanents, et
- le stator porte un induit, notamment un paquet de tôles, pourvu d'un enroulement d'induit qui est raccordé à un circuit d'excitation électronique,
- le compresseur possédant au moins une bielle et au moins un piston qui peuvent être entraînés par le biais d'un vilebrequin, le vilebrequin étant accouplé à l'arbre d'entraînement et
- le moteur électrique étant en connexion en commande avec le circuit d'excitation électronique, lequel est notamment disposé à l'intérieur d'un boîtier de l'arrangement compresseur, lequel est configuré
pour effectuer la commutation électronique du moteur sans balai, est notamment raccordé à un collecteur électronique, et comporte dans l'électronique de puissance au moins un relais électronique et/ou un convertisseur de tension continue, et l'électronique de puissance ayant comme entrée une source de tension continue et comme sortie une source de tension alternative.

4. Agencement de compresseur selon la revendication 3, **caractérisé en ce qu'**un maneton qui forme le vilebrequin et est de configuration excentrique par rapport à l'axe du moteur (MA) se raccorde à l'arbre d'entraînement du côté de la sortie du moteur.

5. Agencement de compresseur selon l'une des revendications 3 ou 4, **caractérisé en ce que** le circuit d'excitation électronique possède en outre :
- un premier module de régulation qui est configuré pour dériver une mesure pour une capacité d'accumulation d'énergie d'une énergie de rotation du rotor, notamment pour surveiller et/ou pour commander ou pour réguler une vitesse angulaire de rotation du rotor.

6. Agencement de compresseur selon l'une des revendications 3 à 5, **caractérisé en ce que** le circuit d'excitation électronique possède en outre :
- un deuxième module de régulation qui est configuré pour surveiller une vitesse de rotation du rotor, notamment pour commander ou pour réguler une vitesse de rotation du rotor, le moteur électrique étant notamment raccordé à un régulateur de vitesse de rotation qui est configuré pour régler de manière régulable, de préférence pour maintenir constante ou pour augmenter, la tension de service aux bornes du moteur.

7. Agencement de compresseur selon l'une des revendications 3 à 6, **caractérisé en ce que** le moteur électrique est configuré pour fonctionner dans un mode de régulation de la pression, le circuit d'excitation électronique possédant en outre :
un troisième module de régulation qui est configuré pour faire fonctionner le moteur électrique dans un mode de régulation de la pression, notamment qui est raccordé à une interface de régulation de la pression du compresseur.

8. Agencement de compresseur selon l'une des revendications 3 à 7, **caractérisé en ce que** le circuit d'excitation électronique possède en outre :
- un quatrième module de régulation qui est configuré pour mettre en oeuvre une régulation de démarrage en douceur et/ou de décélération, pour limiter un courant de démarrage et/ou un courant de décélération (CSS) du moteur électrique, notamment pour régler de manière régulable, de préférence pour maintenir constante ou pour diminuer, la tension de service aux bornes du moteur.

9. Agencement de compresseur selon l'une des revendications 3 à 8, **caractérisé en ce que** pour le réglage d'une tension de service, le circuit d'excitation électronique est configuré pour adapter une tension de service, de préférence sous la forme d'une source de tension alternative, à une tension de réseau de bord - de préférence en alternance ou, au choix, en alternance ou de manière combinable ou simultanément - dans une ou plusieurs des plages de tensions, de préférence une tension continue choisie dans le groupe des plages comprenant :
- une tension entre 8 V et 50 V,
- une tension entre 10 V et 15 V, de préférence de l'ordre de 12 V,
- une tension entre 14 V et 37 V,
- une tension entre 42 V et 49 V, de préférence de l'ordre de 48 V,
- une tension entre 200 V et 650 V.

10. Agencement de compresseur selon l'une des revendications 1 à 9, **caractérisé en ce que** le compresseur peut être entraîné par un mécanisme d'entraînement formé par le moteur électrique et un embiellage, le mécanisme d'entraînement étant logé dans un carter de mécanisme d'entraînement (30) qui intègre en les entourant l'embiellage et le moteur électrique et se raccordant à un logement de piston (1101A),
le carter de mécanisme d'entraînement intégré combinant un carter de moteur (1102) et un carter de vilebrequin (1101B), en étant notamment exempt d'une paroi de séparation entre le carter de moteur (1102) et un carter de vilebrequin (1101B).

11. Agencement de compresseur selon l'une des revendications 3 à 10, **caractérisé en ce qu'**un maneton est monté sur l'arbre d'entraînement d'un seul tenant ou par ajustement serré ou par un assemblage similaire par friction et/ou complémentarité de formes.

12. Agencement de compresseur selon l'une des revendications 3 à 11, **caractérisé en ce que** une cloche de rotor
- est montée sur l'arbre d'entraînement et/ou
- est montée sur un maneton
au moins dans une pièce de raccordement d'un seul tenant ou par ajustement serré ou par un assemblage similaire par friction et/ou complémentarité de formes.

13. Agencement de compresseur selon l'une des revendications 3 à 12, **caractérisé en ce que**
- l'arbre d'entraînement, un maneton et au moins une pièce de raccordement forment un élément structural d'embiellage formé d'un seul tenant ou par ajustement serré ou par un assemblage similaire par friction et/ou complémentarité de formes,
- l'élément structural d'embiellage étant supporté par un arrangement de palier, comprenant un palier de bielle et au moins un palier d'axe, notamment un palier de bielle et un premier et un deuxième palier d'axe.

14. Agencement de compresseur selon l'une des revendications 3 à 13, **caractérisé en ce que** l'arbre d'entraînement, un maneton et au moins la pièce de raccordement forment un élément structural d'embiellage formé d'un seul tenant ou par ajustement serré ou par un assemblage similaire par friction et/ou complémentarité de formes,
- l'élément structural d'embiellage, en combinaison avec une pièce formant palier de butée, étant supporté par un arrangement de palier comprenant un palier de bielle, un palier d'axe et un palier de butée d'axe, notamment un palier de bielle et précisément un premier ou un deuxième palier d'axe et le palier de butée d'axe.

15. Agencement de compresseur selon l'une des revendications 1 à 14, **caractérisé en ce que**
- un arrangement de palier comprend un palier de bielle, un premier palier d'axe (palier A) et un deuxième palier d'axe (palier B), notamment un premier palier d'axe (palier A) et/ou un deuxième palier d'axe (palier B) est formé au moyen d'au moins un roulement à rouleaux ou d'un roulement à aiguilles, notamment avec au moins un manchon de palier ; ou
- un arrangement de palier comprend un palier de bielle et un premier palier d'axe (palier A) ou un deuxième palier d'axe (palier B) et un palier de butée d'axe.

16. Agencement de compresseur selon l'une des revendications 14 ou 15, **caractérisé en ce que** l'élément structural d'embiellage ou la pièce formant palier de butée possède un contrepoids du côté de la sortie du moteur et excentrique par rapport à l'axe du moteur, notamment
- le contrepoids est formé sur l'élément structural d'embiellage entre un palier de bielle et un premier palier d'axe (palier A), notamment d'un seul tenant en tant que partie d'un maneton ; ou
- le contrepoids est formé sur la pièce formant palier de butée entre le palier de bielle et le palier de butée d'axe, notamment d'un seul tenant en tant que partie de la pièce formant palier de butée.

17. Agencement de compresseur selon l'une des revendications 1 à 16, **caractérisé en ce qu'**un arbre d'entraînement est logé dans un premier palier d'axe (A) disposé de manière directement adjacente à un palier de bielle, notamment est logé seulement dans le premier palier d'axe, le premier palier d'axe (A) étant disposé à l'intérieur ou à l'extérieur d'une cloche de rotor.

18. Agencement de compresseur selon l'une des revendications 1 à 17, **caractérisé en ce qu'**un rotor et/ou un arbre d'entraînement est logé dans un deuxième palier d'axe (B) disposé au moins de manière partiellement espacée d'un palier de bielle par l'arbre d'entraînement, notamment est logé seulement dans le deuxième palier d'axe, le deuxième palier d'axe (A) étant disposé à l'intérieur ou à l'extérieur de la cloche de rotor.

19. Agencement de compresseur selon l'une des revendications 1 à 18, **caractérisé en ce que**
- un premier palier d'axe (palier A), en tant que palier d'axe côté sortie du moteur, est fixé au niveau d'une paroi intermédiaire (31) du carter de mécanisme d'entraînement ; et/ou
- un deuxième palier d'axe (palier B), en tant que palier d'axe à l'opposé d'un palier d'axe côté sortie du moteur, est fixé au niveau d'une paroi extérieure de carter associée au moteur électrique du carter de mécanisme d'entraînement (30), notamment au niveau d'une protubérance (32.1) de celle-ci, de préférence au niveau d'un chapeau de carter (32), notamment est fixé à côté d'une terminaison de carter de moteur électrique, et/ou
- un palier de butée d'axe, en tant que palier d'axe côté sortie du moteur, est fixé au niveau d'une paroi extérieure de carter supplémentaire associée à l'embiellage du carter de mécanisme d'entraînement (30), notamment au niveau d'une protubérance (34.1) de celle-ci, de préférence au niveau d'une plaque de protection de carter (34), notamment à côté d'une terminaison de boîtier de compresseur.

20. Agencement de compresseur selon l'une des revendications 1 à 19, **caractérisé en ce qu'**un stator et/ou un rotor sont maintenus par le biais d'un élément porteur en porte-à-faux qui possède une portion de bras en porte-à-faux cintrée, notamment ayant une section transversale approximativement en forme de V.

21. Agencement de compresseur selon la revendication 20, **caractérisé en ce que** la portion de bras en porte-à-faux s'étend transversalement par rapport à l'arbre d'entraînement et
- une première portion de bras en porte-à-faux pour le stator prend appui sur un carter de mécanisme d'entraînement et/ou
- une deuxième portion de bras en porte-à-faux pour le rotor prend appui sur l'arbre d'entraînement et/ou le maneton,
- notamment la première et/ou la deuxième portion de bras en porte-à-faux est maintenue d'un seul tenant ou par ajustement serré ou par un assemblage similaire par friction et/ou complémentarité de formes.

22. Équipement d'alimentation en air comprimé comprenant un arrangement compresseur selon l'une des revendications 1 à 21, notamment pour faire fonctionner un équipement pneumatique (1001) d'un véhicule, notamment un système de suspension pneumatique et/ou un frein et/ou un dispositif de conditionnement d'air comprimé, possédant
- une arrivée d'air comprimé (1), un raccord d'air comprimé (2) vers l'équipement pneumatique (1001) et un raccord de purge d'air (3) vers l'environnement ;
- une conduite pneumatique principale (210) entre l'arrivée d'air comprimé (1) et le raccord d'air comprimé (2), laquelle possède un déshydrateur d'air (211), notamment un clapet anti-retour déblocable d'un arrangement de valves ;
- une conduite de purge d'air (220) entre le raccord d'air comprimé (2) et le raccord de purge d'air (3), comprenant une valve de purge d'air (322), notamment en association avec une valve pilote (321) de l'arrangement de valves (320),
- l'arrivée d'air comprimé (1) pouvant être alimentée avec de l'air comprimé qui peut être généré par l'arrangement compresseur.

23. Système d'alimentation en air comprimé (1002) comprenant un équipement pneumatique (1001), notamment un équipement d'alimentation en air comprimé (1000) selon la revendication 22, comprenant une conduite pneumatique principale (210), notamment destiné à faire fonctionner un système de suspension pneumatique d'un véhicule, de préférence d'un véhicule de tourisme, d'un 4x4, d'un poids lourd ou d'un véhicule utilitaire similaire,
- pour faire fonctionner l'équipement pneumatique (1001) avec un flux d'air comprimé et/ou pour le conditionnement de l'air comprimé,
- une arrivée d'air comprimé (1) raccordée à un compresseur (330) de l'arrangement compresseur selon l'une des revendications 1 à 20 et un raccord d'air comprimé (2) vers l'équipement pneumatique (1001) étant reliés pneumatiquement.

24. Véhicule, notamment véhicule de tourisme, comprenant un équipement pneumatique (1001), notamment un système de suspension pneumatique, et un équipement d'alimentation en air comprimé (1000) selon la revendication 22 pour faire fonctionner l'équipement pneumatique (1001) avec un flux d'air comprimé (DL).

25. Procédé pour faire fonctionner un équipement d'alimentation en air comprimé d'un véhicule comprenant un arrangement compresseur, possédant un compresseur (330) comprenant :
- un moteur électrique (332) qui est réalisé sous la forme d'un moteur à courant continu sans balai à commutation électronique avec un circuit d'excitation comportant une électronique de puissance (moteur BLDC),
- un compresseur pneumatique (331),
**caractérisé en ce que**
- le moteur électrique (332) est réalisé sous la forme d'un moteur à rotor externe, le procédé comprenant notamment les étapes suivantes :
- dérivation d'une mesure pour la capacité d'accumulation d'énergie d'une énergie de rotation du rotor.
